(19) Europäisches Patentamt
European Patent Office
Office européen des brevets

(11) EP 2 712 188 A1

(12) EUROPEAN PATENT APPLICATION
published in accordance with Art. 153(4) EPC

(43) Date of publication:
26.03.2014 Bulletin 2014/13

(51) Int Cl.:
H04N 7/173 (2011.01)     G06F 21/22 (0000.00)
G06F 21/24 (0000.00)     H04H 60/14 (2008.01)

(21) Application number: 12789444.2

(22) Date of filing: 18.05.2012

(86) International application number:
PCT/JP2012/062826

(87) International publication number:
WO 2012/161125 (29.11.2012 Gazette 2012/48)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 20.05.2011  JP 2011114051

(71) Applicant: Nippon Hoso Kyokai
Tokyo 150-8001 (JP)

(72) Inventors:
• YAMAMURA, Chigusa
Tokyo 157-8510 (JP)

• FUJII, Arisa
Tokyo 157-8510 (JP)
• OTSUKI, Kazuhiro
Tokyo 157-8510 (JP)

(74) Representative: Tischner, Oliver
Lavoix Munich
Bayerstrasse 83
80335 München (DE)

(54) RECEIVER, PROGRAM AND RECEIVING METHOD

(57) A receiver includes: a broadcast reception unit configured to receive a broadcast signal; a communication unit configured to acquire the user identification information by communicating with a terminal device; a policy determination unit configured to read the policy associated with the user identification information from a related data storage unit based on the user identification information acquired by the communication unit, and determine whether or not to permit the access to the data corresponding to the user identification information based on the read policy; a data reading unit configured to read the data corresponding to the user identification information from the related data storage unit in case that the access has been permitted; and an application execution unit configured to start an application according to an application start command included in the broadcast signal and execute the application using the data read by the data reading unit.

FIG. 1

EP 2 712 188 A1

**Description**

[Technical Field]

The present invention relates to a receiver, a program, and a receiving method for receiving a broadcast.
Priority is claimed on Japanese Patent Application No. 2011-114051, filed May 20, 2011, the contents of which are incorporated herein by reference.

[Background Art]

As a receiver which receives broadcast waves, a device having an additional function in addition to a function of receiving and displaying data of a television (TV) program is known. For example, in Non-Patent Reference 1, a broadcasting extension function executable according to a security class is specified in a data broadcast. Using this standard, it is possible to select an executable function according to the security class. For example, in Non-Patent Reference 1 (pp. 109 to 116), a function of reading and writing information related to a user of a receiver from and to a nonvolatile memory within the receiver is specified. Using this function, the receiver can improve convenience for the user by performing a process corresponding to the user. In addition, in Non-Patent Reference 1 (pp. 145 to 163), a function for using a communication function is specified.
In addition, research and development (R&D) for implementing a broadcasting/communication cooperation service in which broadcasting and communication are in cooperation are currently ongoing (for example, Non-Patent Reference 2).

[Prior Art Documents]

[Non-Patent Reference]

[Non-Patent Reference 1]
"Data Coding and Transmission Specification for Digital Broadcasting," Association of Radio Industries and Businesses (ARIB) standard (STD)-B24 Version 5.4 (Fascicle 2) (1/2), published by ARIB, December 16, 2009
[Non-Patent Reference 2]
Kato Hisakazu, "Toward the Construction of Hybridcast," NHK Science & Technical Research Laboratories (STRL) R&D, No. 123, pp. 56 to 63, September 2010

[Summary of Invention]

[Problem to Be Solved by the Invention]

In an environment in which broadcasting and communication cooperate such as an environment capable of using a function for using the above-described communication function or an environment capable of using a broadcasting/communication cooperation service, various service providers are expected to provide a detailed service corresponding to an individual user through communication.
For example, a corresponding user can expect to be provided with information corresponding to his or her preference.
However, there is a problem in that it is difficult to provide a corresponding user with information corresponding to the preference of each user who is viewing a TV when a plurality of users share one TV even when the broadcast extension function disclosed in Non-Patent Reference 1 is used. Here, if an application can acquire information related to the user who is viewing the television, it is possible to provide an individual service to each user. For example, when various information is displayed in a data broadcast or broadcasting/communication cooperation service, information suitable for each user can be provided by selecting information to be provided according to a preference, sex, or age of the user. Here, because it is difficult to protect privacy of the users when a mechanism in which all applications can access information regarding all the users is constructed, it is preferable to manage access to the user-related information.
The present invention has been made in view of such circumstances, and provides a receiver, a program, and a receiving method capable of protecting privacy of users by managing access to information related to the users using the receiver while providing an individual service to each user.

[Means to Solve the Problem]

[1] A first aspect of the present invention is a receiver including: a broadcast reception unit configured to receive a broadcast signal; a related data storage unit which associates and stores identification information of a user, data related to the user, and a policy representing a determination criterion of whether or not to permit access to the data; a communication unit configured to acquire the user identification information by communicating with a terminal device; a policy determination unit configured to read the policy associated with the user identification information from the related data storage unit based on the user identification information acquired by the communication unit, and determine whether or not to permit the access to the data corresponding to the user identification information based on the read policy; a data reading unit configured to read the data corresponding to the user identification information from the related data storage unit in case that the access has been permitted; and an application execution unit configured to start an application according to an application start command included in the broadcast signal and execute the application using the data read by the data reading unit.

[2] In the first aspect of the present invention, the related data storage unit may associate and store the user-related data and the policy representing a determination criterion of whether or not to permit the access to the user-related data further in association with identification information of the application, and the policy determination unit may be configured to compare the application identification information associated with the user-related data indicated by the identification information to identification information of an application for which the read request has been output based on the read policy, and permit the access in case that the identification information is consistent.

[3] In the first aspect of the present invention, the policy determination unit may be configured to determine whether or not to permit the access according to an operation input indicating whether or not to permit the access to the user-related data indicated by the identification information based on the read policy.

[4] In the first aspect of the present invention, the related data storage unit may store data in correspondence with the key information, and the data reading unit may be configured to read the data corresponding to both the user identification information and the key information based on key information designated from the application execution unit.

[5] A second aspect of the present invention is a program for causing a computer for use in a receiver, the program executing: receiving, by a broadcast reception unit, a broadcast signal; associating and storing, by a related data storage unit, identification information of a user, data related to the user, and a policy representing a determination criterion of whether or not to permit access to the data; acquiring, by a communication unit, the user identification information by communicating with a terminal device; reading, by a policy determination unit, the policy associated with the user identification information from the related data storage unit based on the user identification information acquired by the communication unit, and determining whether or not to permit the access to the data corresponding to the user identification information based on the read policy; reading, by a data reading unit, the data corresponding to the user identification information from the related data storage unit in case that the access has been permitted; and starting, by an application execution unit, an application according to an application start command included in the broadcast signal, and executing the application using the data read by the data reading unit.

[6] A third aspect of the present invention is a receiving method including: receiving a broadcast signal; associating and storing identification information of a user, data related to the user, and a policy representing a determination criterion of whether or not to permit access to the data; acquiring the user identification information by communicating with a terminal device; reading the policy associated with the user identification information based on the acquired user identification information, and determining whether or not to permit the access to the data corresponding to the user identification information based on the read policy; reading the data corresponding to the user identification information in case that the access has been permitted; and starting an application according to an application start command included in the broadcast signal, and executing the application using the read data.

[Effect of the Invention]

According to the present invention, it is possible to protect privacy of users by managing access to information related to the users using a receiver while providing an individual service to each user.

[Brief Description of the Drawings]

Fig. 1 is a block diagram illustrating a configuration of a receiver according to an embodiment of the present invention.

Fig. 2 is a diagram illustrating users of an example of a broadcasting/communication cooperation system to which the present invention is applied and their relationships.

Fig. 3 is a diagram illustrating an overall configuration of the broadcasting/communication cooperation system.

Fig. 4 is a diagram illustrating a terminal cooperation model of the broadcasting/communication cooperation system.

Fig. 5 is a conceptual diagram of a type of service of the broadcasting/communication cooperation system.

Fig. 6 is a diagram illustrating an example of a text representation of an AIT for use in the broadcasting/communication cooperation system.

Fig. 7 is a diagram illustrating a life cycle of an application in the broadcasting/communication cooperation system.

Fig. 8 is a diagram illustrating a flow of data between providers in the broadcasting/communication cooperation system.

Fig. 9 is a diagram illustrating a flow of data in the overall broadcasting/communication cooperation system.

Fig. 10 is a diagram illustrating a sequence of a recommendation service in the broadcasting/communication cooperation system.

Fig. 11 is a diagram illustrating a transmission protocol stack in the broadcasting/communication cooperation system.

Fig. 12 is a diagram illustrating an application management model in the broadcasting/communication cooperation system.

Fig. 13 illustrates a functional model of a secure manager in the broadcasting/communication cooperation system.

Fig. 14 is a diagram illustrating a concept of a screen presentation control scheme in the broadcasting/communication cooperation system.

Fig. 15 is a diagram illustrating a basic operation model of screen presentation control in the broadcasting/communication cooperation system.

Fig. 16 illustrates an example of screen presentation control corresponding to a policy level in the broadcasting/communication cooperation system.

Fig. 17 illustrates an example of presentation control upon receiving an earthquake early warning (EEW) in the broadcasting/communication cooperation system.

Fig. 18 is an overall configuration diagram of the broadcasting/communication cooperation system according to an embodiment of the present invention.

Fig. 19 is a functional block diagram illustrating an internal configuration of a receiver according to the same embodiment.

Fig. 20 is a block diagram illustrating a detailed configuration of an application execution control unit according to the same embodiment.

Fig. 21 is a block diagram illustrating a detailed configuration of a presentation control unit according to the same embodiment.

Fig. 22 is a data structure diagram illustrating a data structure of user-related information in the same embodiment.

Fig. 23 is a sequence diagram illustrating an example of an operation of the receiver when an application execution unit acquires target data in the same embodiment.

Fig. 24 is a data structure diagram illustrating another data structure of the user-related information in the same embodiment.

Fig. 25A is a data structure diagram illustrating a first data structure of policy information in the same embodiment.

Fig. 25B is a data structure diagram illustrating a second data structure of policy information in the same embodiment.

Fig. 25C is a data structure diagram illustrating a third data structure of policy information in the same embodiment.

Fig. 25D is a data structure diagram illustrating a fourth data structure of policy information in the same embodiment.

Fig. 26 is a sequence diagram illustrating a first example of the operation of the receiver in the case in which a policy determination unit makes a policy determination when the application execution unit acquires target data in the same embodiment.

Fig. 27 is a sequence diagram illustrating an example of the operation of the receiver in the case in which the policy determination unit makes a policy determination when the application execution unit writes target data in the same embodiment.

Fig. 28 is a diagram illustrating an example of user-related information after a resource control unit has written data in the same embodiment.

Fig. 29 is a sequence diagram illustrating a second example of the operation of the receiver in the case in which the policy determination unit makes a policy determination when the application execution unit acquires target data in the same embodiment.

[Embodiment for Carrying Out the Invention]

Hereinafter, the embodiments of the present invention will be described in detail with reference to the drawings.

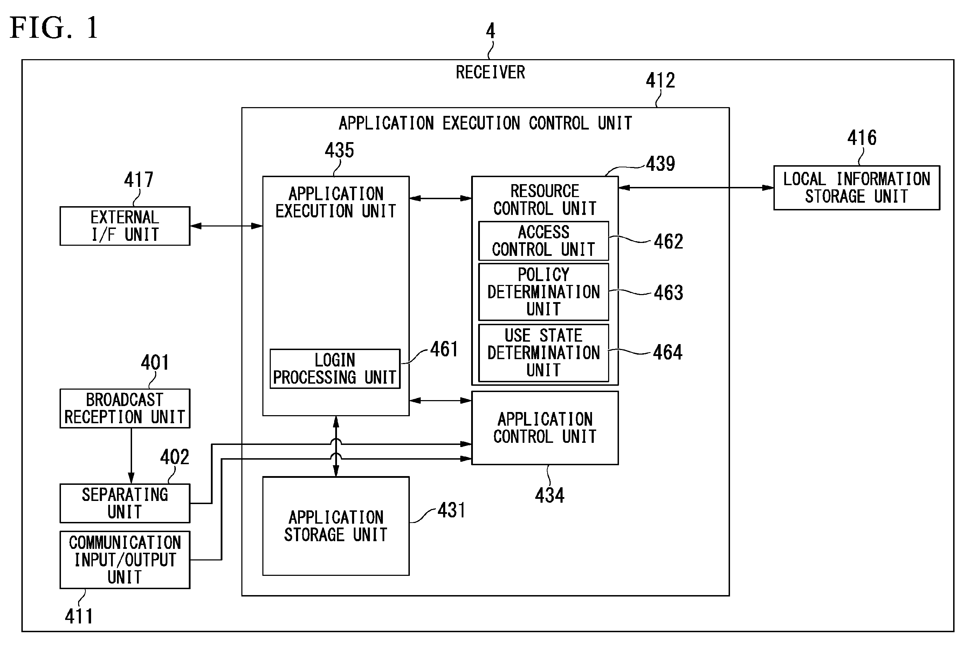

Fig. 1 is a block diagram illustrating a configuration of a receiver according to an embodiment of the present invention. As illustrated in Fig. 1, the receiver 4 includes a separating unit 402, a communication input/output unit 411, an application execution control unit 412, a local information storage unit (related data storage unit) 416, and an external interface (I/F) unit (communication unit) 417. The application execution control unit 412 includes an application storage unit 431, an application control unit 434, an application execution unit 435, and a resource control unit (data reading unit) 439. The application execution unit 435 includes a login processing unit 461, and the resource control unit 439 includes a use state determination unit 464, an access control unit 462, and a policy determination unit 463.

The external I/F unit 417 acquires an operation input of the user by communicating with a terminal device. For example, the external I/F unit 417 communicates with the terminal device connected to the external I/F unit 417 via a wireless local area network (LAN).

The local information storage unit 416 stores data in association with identification information of the user as will be described later.

The login processing unit 461 executes the user's login and logout.

The use state determination unit 464 generates use state information according to a login state of the user.

The resource control unit 439 acquires the data associated with the use state information generated by the use state determination unit 464 from the local information storage unit 416.

The policy determination unit 463 determines whether to permit data acquisition based on a policy indicating a determination criterion of whether to permit access to data as a pre-processing operation in which the resource control unit 439 acquires the data from the local information storage unit 416.

The access control unit 462 controls access to the local information storage unit 416 of the resource control unit 439.

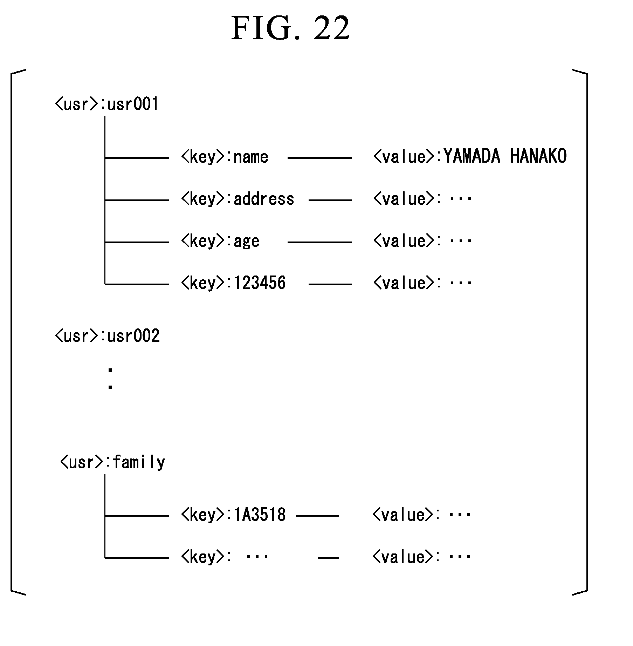

Further details will be described later using Figs. 22 to 29.

[Description of example of broadcasting/communication cooperation system to which present invention is applied]

Here, an example of a broadcasting/communication cooperation system to which the present invention is applied will be described. The example of the broadcasting/communication cooperation system (a broadcasting/communication convergence system, a broadcasting/communication system, or a transmitting/receiving system) to which the present invention is applied, for example, is a Hybridcast (registered trademark) system, and provides a broadcasting/communication cooperation service (a Hybridcast (registered trademark) service, a broadcasting/communication convergence service, and a broadcasting/communication service). The broadcasting/communication cooperation service implemented in an example of the broadcasting/communication cooperation system to which the present invention is applied cooperates a digital broadcasting service and a communication service by the Internet or the like. For example, in the broadcasting/communication cooperation service, a receiver such as a digital TV, a personal computer, or a portable terminal simultaneously displays screens by combining a display screen (hereinafter also referred to as a "broadcast screen" of a program display screen) of a broadcast program (hereinafter also referred to as a "program") transmitted through broadcasting with a display screen (hereinafter also referred to as an "application screen" or "application display screen") of a service or contents acquired by an application implemented in the receiver through communication.

[1. System model]

[1.1 User of broadcasting/communication cooperation system]

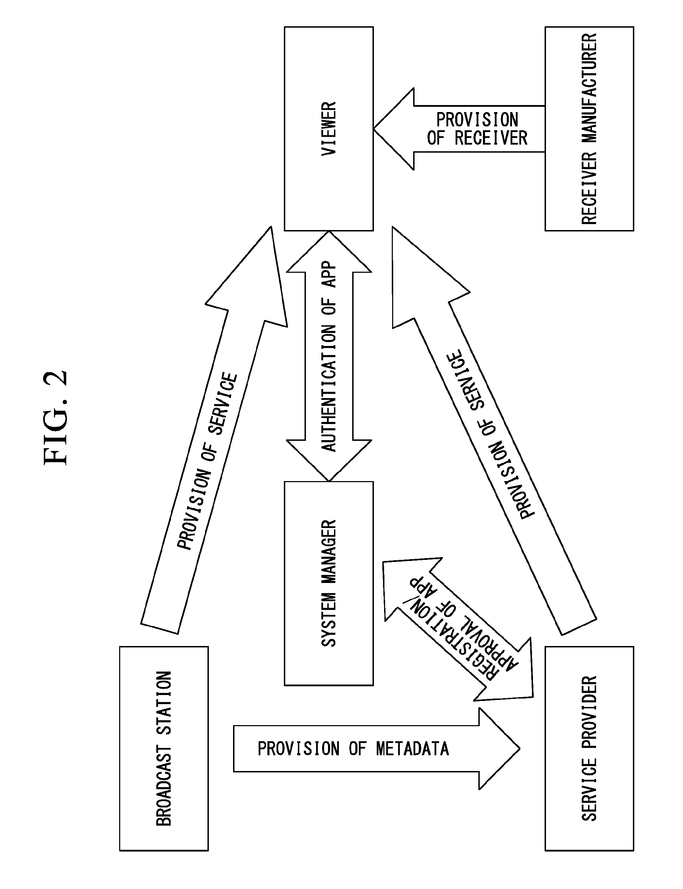

Fig. 2 is a diagram illustrating users of the broadcasting/communication cooperation system and their relationships.

A broadcast station, which transmits a program associated with an organization, distributes a program to a viewer through broadcast radio waves or a communication network. The broadcast station provides metadata related to a program to a service provider in order to enrich a broadcasting/communication cooperation service.

The service provider for providing the broadcasting/communication service creates and distributes contents and an application (hereinafter also referred to as an "app") for providing the broadcasting/communication cooperation service to the viewer. Hereinafter, when the "application" is simply referred to, this indicates an application for providing the broadcasting/communication cooperation service (an application of the broadcasting/communication cooperation service). It is not necessary for a creator and a distributor of the contents or the application to be the same service provider. The broadcast station may also be a service provider. The service provider can also provide link information to another service provider. The service provider can request registration of an application and acquire permission from a system manager in order to indicate that the application to be provided is official. The approved application is not limited to an operation on the receiver. On the other hand, although it is difficult for a screen to be displayed by a denied application to overlap a display screen and audio of a program, it is possible to reduce the display screen of the application and display the reduced display screen outside the screen of the broadcast program. The approved application is referred to as an official application, and the disapproved application is referred to as an unofficial application. The official application is also referred to as a registered application, an authenticated application, a certified application, a licensed application, an authorized application, an authorized (A) type application, or an A application. In addition, the unofficial application is also referred to as a general application, an unauthenticated application, an uncertified application, an unofficial application, an unauthorized (U) type application, or a U application.

The system manager is an authority for certifying that the application (receiver app) to be provided to the viewer is official. The determination of the system manager of whether to approve the requested application is based on entrustment from the broadcast station.

A receiver manufacturer manufactures and sells the receiver. The receiver manufacturer can enable the receiver to operate by installing an application for making various settings of the receiver and the like in the receiver. In this case, a display screen of the application in the receiver may overlap a display screen (video) of a program.

A viewer who views a program broadcast by a broadcast station uses a broadcasting/communication cooperation service.

The viewer can download or start the application according to his/her own intention. In addition, the viewer can cause an application display screen to overlap a program display screen (video) according to his/her own intention.

[1.2. System configuration of broadcasting/communication cooperation system]

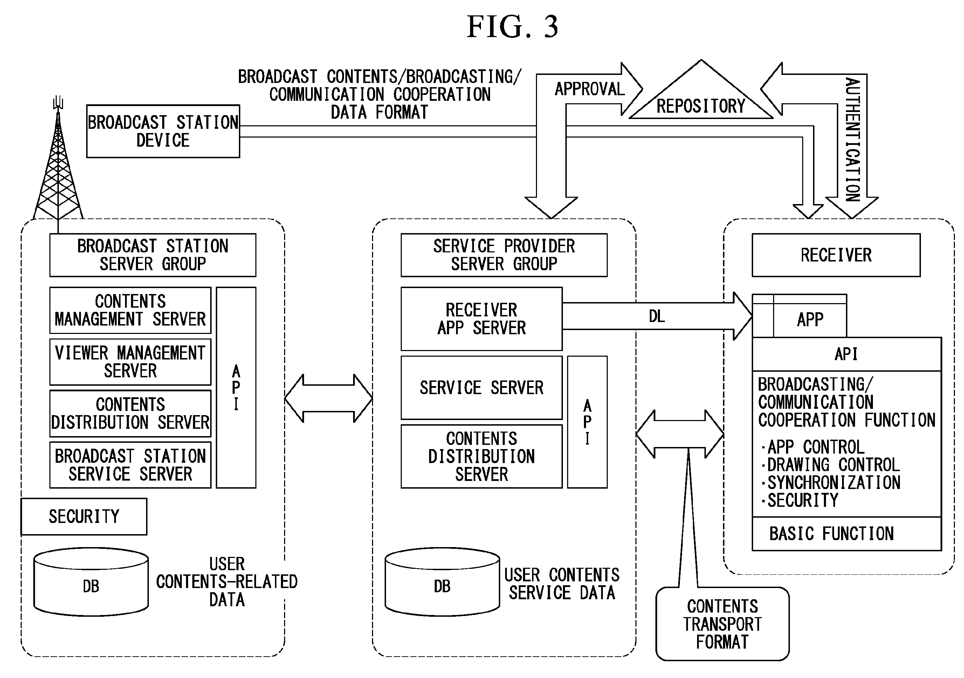

Fig. 3 is a diagram illustrating an overall configuration of the broadcasting/communication cooperation system. The broadcasting/communication cooperation system is configured by functionally adding a "broadcast station server group," a "service provider server group," and a "receiver" to a current broadcast station facility using radio waves.

The broadcast station possesses the broadcast station facility. Further, the broadcast station configures and administrates both the broadcast server group and the service provider server group. In addition, the service provider configures and administrates the service provider server group. The system manager administrates a repository server. The receiver manufacturer manufactures and sells the receiver. The viewer possesses the receiver and uses the broadcasting/communication cooperation service.

The receiver (a Hybridcast (registered trademark) receiver or a broadcast reception communication device) is equipped with a standardized common application program I/F (API). In addition, the receiver receives a broadcast of a current scheme such as a terrestrial digital broadcast or a broadcasting satellite (BS) digital broadcast.

The broadcast station facility multiplexes a signal for starting the broadcasting/communication cooperation system into broadcast waves. A multiplexing scheme will be described later.

[1.3 Configuration example of broadcast station server group]

The broadcast station server group manages and distributes contents and metadata provided in the broadcast station.

For example, the broadcast station server group includes various servers, a data accumulation unit (database (DB)), and an API, and servers of the broadcast station server group include a contents management server, a viewer management server, a contents distribution server, and a broadcast station service server.

The contents management server, which manages contents, manages a program and metadata which are broadcast contents. The contents management server includes a program management server which manages a broadcast program or a program to be broadcast or a metadata management server which manages metadata related to the program. The metadata, for example, represents a program title, a program identifier (ID), a program outline, a performer, a staff, a broadcasting date, a script, subtitles, an explanation, etc.

The viewer management server manages viewers (users), and the contents distribution server distributes contents data through communication. The broadcast station service server is a server for enabling the broadcast station to provide a service to the service provider. The service provided by the broadcast station service server, for example, is a social network service managed by the broadcast station, a web log (blog) of each broadcast program, or the like.

The data accumulation unit of the broadcast station server group includes a part storing contents and metadata provided in the broadcast station and a database (DB). Only the service provider that performs management can access accumulated data, and a limitation is set so that access by others is disabled.

The API of the broadcast station server group is used to provide data in response to a request from the service provider server group. The API is a program to be called by an application to receive the service and its execution unit.

[1.4 Configuration example of service provider server group]

The service server group administrated by the service provider manages and provides an application and contents. The service server group includes a receiver app server, a service server, a contents distribution server, a data accumulation unit (DB), and an API.

The receiver app server is a server which manages an application of a broadcasting/communication cooperation service. The service provider saves, manages, and distributes an application to operate in the receiver.

The service provider includes an organization or an individual. In response to a request from the receiver, the receiver app server notifies the receiver of a saving position of an application file (the application file will be described later), and distributes the application file.

The service server is a server which provides a service in response to a request from the application to operate in the receiver. For example, there are a multilingual subtitle server, a speech speed conversion audio server, a social TV server, a recommendation server, a program review server, a bookmark server, etc. as the service server.

The contents distribution server is a server which provides contents in response to a request from an application to operate in the receiver. The contents distribution server, for example, includes a video on demand (VOD) distribution server, a subtitle distribution server, a multiview distribution server, etc.

The data accumulation unit of the service provider server group is a place in which contents data, metadata, data created by the service provider, viewer data, and an application file are saved. Only the service provider that performs management can access data saved in the data accumulation unit and access by others is disabled.

In response to a request from the application operating in the receiver, the API of the service server group is used to provide an application file, contents, and a service.

[1.5 Receiver]

The receiver receives and displays a broadcast of a current scheme and executes the broadcasting/communication cooperation service. The broadcast of the current scheme is a terrestrial digital broadcast, a satellite broadcast such as a BS digital broadcast, or a data broadcast. In addition, the receiver is connected to the Internet.

The receiver sends an application download request to the service provider server based on information multiplexed into received broadcast waves. The receiver executes an application program included in a downloaded application file, and therefore an application operates on the receiver. The application operating on the receiver acquires contents by accessing the service provider server.

In addition, the receiver has a broadcasting/communication cooperation function which is necessary to execute a broadcasting/communication cooperation service such as a synchronization function or an application control function. Because an API for the broadcasting/communication cooperation function is common, production of the application is easy and the application does not depend upon the receiver.

In the broadcasting/communication cooperation service, a function for cooperation with a device such as a personal computer or a portable terminal is introduced.

There are a broadcasting/communication cooperation base function and an optional function to be implemented if necessary as the broadcasting/communication cooperation function. The receiver manufacturer implements the broadcasting/communication cooperation base function in all receivers. The application uses the broadcasting/communication cooperation function through the API. The broadcasting/communication cooperation function operates based on the API as will be described later.

The API to be implemented by the receiver is specified to cause an operation of the application to be the same without depending upon the receiver. Because all applications perform a process of the receiver through the API, it is difficult for the application to access a function unique to the receiver without involving the API.

[1.6 Terminal cooperation model]

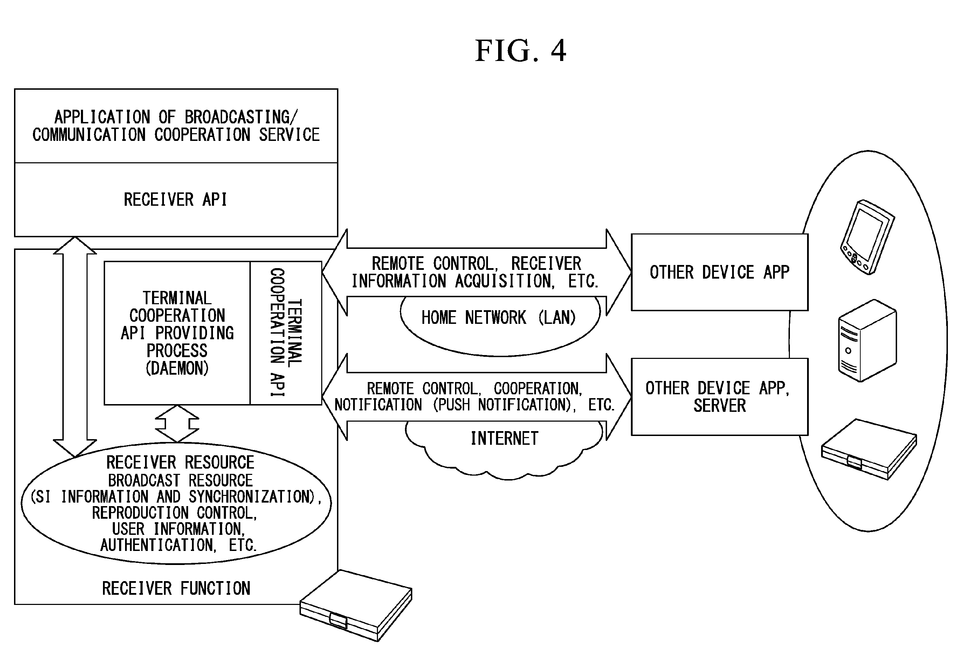

Fig. 4 is a diagram illustrating a terminal cooperation model of the broadcasting/communication cooperation system.

The receiver can provide a service in cooperation with a terminal such as a portable terminal. As the cooperation terminal, for example, there are a personal computer, a portable telephone, a tablet, a smartphone, a personal digital assistant (PDA), etc. The receiver provides a function capable of being used by another terminal as a receiver function as the API. The API that provides the function capable of being used by the other terminal is referred to as a terminal cooperation API. For example, using the terminal cooperation API, the application operating on the portable terminal can access a broadcast resource for acquisition of program information and the like or call the receiver function such as reproduction control.

[1.6.1 Terminal cooperation API]

The terminal cooperation API is an API for enabling another terminal or an application operating on the other terminal to use the function of the receiver. The cooperation terminal targets a terminal on a home network (LAN) and a terminal having access through the Internet. A process of specifying an API which provides various operations will be described later.

[1.6.2 Process of providing terminal cooperation API]

The process of providing the terminal cooperation API operating on the receiver causes the terminal cooperation API to operate. The process of providing the terminal cooperation API operates like a type of resident daemon process.

[1.6.3 Protocol for calling API]

As the protocol for calling the terminal cooperation API, for example, Representational State Transfer (RESTful), Universal Plug and Play (UPnP), Extensible Messaging and Presence Protocol (XMPP), etc. are used.

[1.6.4 Push notification function]

The receiver also corresponds to a notification function in which a server or the like on the Internet notifies the receiver of information in a push. The receiver receives the notification information provided by the push from the server or the like. According to the notification function, some reception operations may be controlled, and the notification function is also specified as part of a terminal cooperation API spec.

[2. Broadcasting/communication cooperation application]

[2.1 Service and application models]

The application model of the broadcasting/communication cooperation system is a model added and changed based on a concept of an application model of Digital Video Broadcasting Project (DVB)-Globally Executable Multimedia Home Platform (GEM) 1.2.

[2.1.1 Broadcasting/communication cooperation application]

An operation of the application of the broadcasting/communication cooperation service is classified into two patterns of an operation (cooperation) cooperating with audio visual (AV) contents and an independent operation (non-cooperation) of an application. The AV contents are broadcast contents (program) or communication contents (VoD or the like).
In the case of the cooperation, life cycle control of an application such as a start is performed in cooperation with broadcast or communication contents. The application is started based on an application information table (AIT) (the AIT and application start information) distributed along with the AV contents. In this case, in addition to a start or end operation by the viewer, an AV contents provider such as the broadcast provider can also control a life cycle of an automatic start or end of the application and the like.
On the other hand, in the case of the non-cooperation, the application independently starts and ends without cooperation with broadcast or communication contents. In this case, the life cycle of the application such as the start or end of the application is controlled only by the viewer.

[2.1.2 Service]

Although the service is a continuous service of a program which is organized by the broadcast provider and is able to be broadcast as part of the schedule in the related art, such a concept is extended in the broadcasting/communication cooperation system and two service types of a stream-dependent service and an independent service are defined.

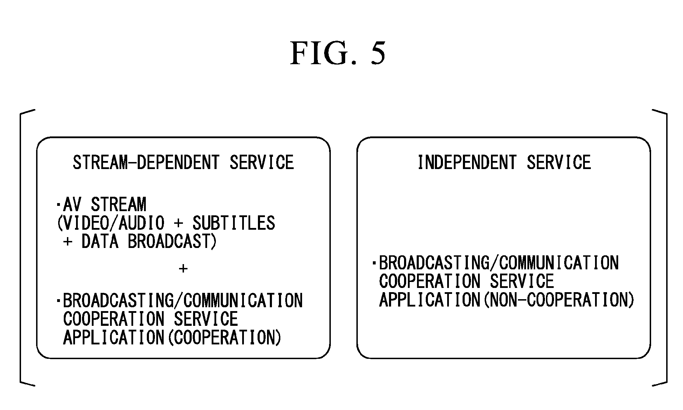

Fig. 5 is a conceptual diagram of a type of service.
In the receiver, an associated application is started by artificially selecting channels of the stream-dependent service and the independent service.
The stream-dependent service has an extended meaning from a concept of a service of the related art, and is configured by adding an application(s) operating in cooperation with the AV stream to be transmitted through broadcasting or communication to the AV stream. It is possible to start the application in cooperation through selection/reproduction of the AV stream (channel selection in the case of the broadcasting).
On the other hand, the independent service is configured only by an application(s) without including a video/audio stream. The viewer causes the application to be started by selecting the independent service.

[2.1.3 Start of application acquired on the fly and start of installed application]

For the start of an application, there are two methods including a method of acquiring and starting the application file on the fly and a method of starting the application file accumulated (installed) on the receiver in advance. On-the-fly is a method of acquiring the application file through communication when the application is executed, and is also referred to as a non-installation type and a direct execution type.

The receiver starts an application program of an application file in a local file system based on dissemination of the application according to the AIT as will be described later. When the application file is acquired and installed through communication, an operation in which the receiver rewrites information within a location layer (see Section 2.5.1) set in the associated AIT to a location on the local file system, and generates a value (necessary in an AIT unit of the independent service) for identifying the independent service if necessary and the like are necessary.

[2.2 Application dissemination method (signaling)]

[2.2.1 Application start information (AIT)]

The dissemination of the application included in the service is performed according to notification application start information at the time of service selection. The AIT defined in ARIB STD-B23 (hereinafter referred to as ARIB-J) is used as the application start information. In each of the stream-dependent service and the independent service, the AIT for the service is disseminated. Details of a method of sending the AIT in each service will be shown hereinafter.

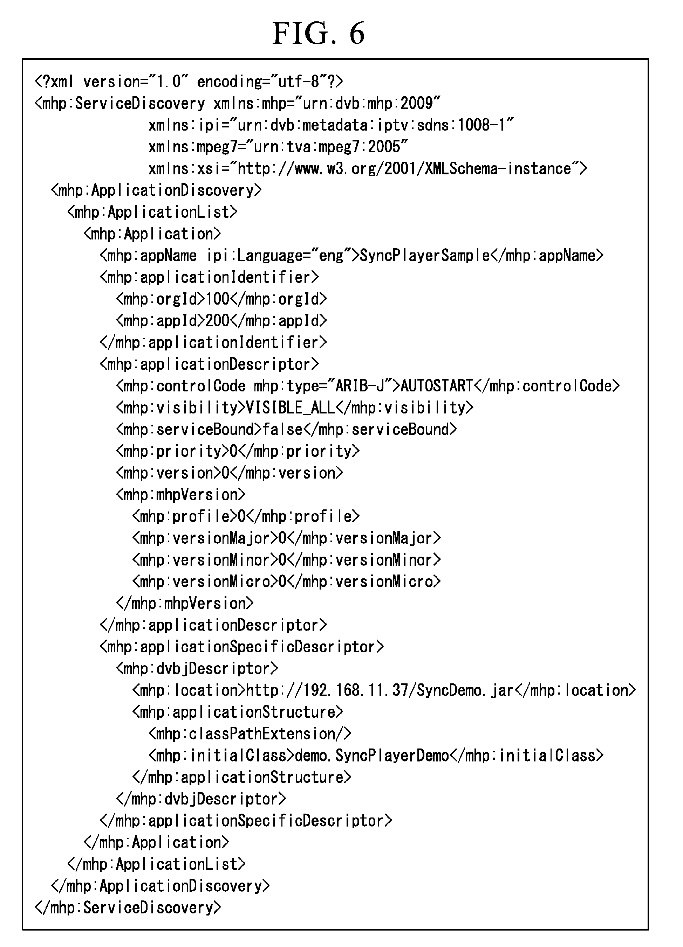

Fig. 6 is a diagram illustrating an example of a text representation of the AIT for use in the broadcasting/ communication cooperation system.

The AIT for use in the broadcasting/communication cooperation system is based on the AIT specified in ARIB-J. In the AIT, there are a binary representation for transmission in a table of service information (SI) and a text representation (AIT file) according to an extensible markup language (XML) format. In Fig. 6, an example of the text representation is illustrated. In the AIT, an application ID (applicationIdentifier) for specifying the application, a control code (controlCode) for controlling an application state, location information (location) for indicating a storage position (storage place) of an application, etc. are described.

[2.2.2 Dissemination of application cooperating with AV contents]

In the dissemination of the application cooperating with the AV contents, there are a case in which the AIT is multiplexed into the AV contents to be transmitted in a Moving Picture Experts Group (MPEG)-2 transport stream (TS) and a case in which separate AIT information is transmitted. By transmitting the AIT in cooperation with the AV contents, the life cycle control such as a start of an application cooperating with a broadcast program or a start of a dynamic application cooperating with progress of a program is possible in the receiver.

As a dissemination method, for example, there are (1) addition of an elementary stream (ES) for the AIT, (2) addition of a descriptor for an event information table (EIT), (3) transmission in a carousel type, (4) acquisition of an AIT file in communication, (5) transmission of a dynamic AIT file in communication, etc.

In the case of (1) addition of the ES for the AIT, the ES of the AIT is multiplexed into a broadcast TS as specified in the ARIB-J.

In the case of (2) addition of the descriptor for the EIT, as in representation control as will be described later, a descriptor for the EIT (present/follow (p/f)) is added and the same information as that to be transmitted in the AIT is transmitted.

In the case of (3) transmission in the carousel type, the AIT is transmitted in a digital storage media command and control (DSM-CC) data carousel. For example, the AIT file is transmitted in a specific module. Although the overhead of an acquisition time is assumed by performing the transmission in the carousel type, it is not necessary to change a current broadcast signal.

As an operation example of the carousel, a component tag of a carousel for broadcasting/communication cooperation start file transmission and a module are fixed. For example, "AA" is set in the component tag, "0000" is set in a module ID, and a type indicating that there is an AIT is set in a type descriptor of the module. The receiver monitors an update of the module, reads the AIT again upon detecting the update, and executes control designated according to the AIT (life cycle control of the application).

In the case of (4) acquisition of the AIT file in the communication, a separately prepared AIT file is acquired simultaneously with selection of the AV contents. For example, the two are acquired based on information in which information (a contents ID) of the AV contents to be reproduced and application start information (AIT) are described. It is possible to use an idea of use unit contents of server type broadcasting (ARIB TR-B27) or an entry component.

In the case of (5) transmission of a dynamic AIT file in communication, control of starting a new application or ending an application during the start while the AV contents are reproduced is performed according to the AIT transmitted by communication. When control is performed at a timing not assumed in advance, notification is performed according to a push via communication.

[2.2.3 Dissemination of application which operates independently]

The receiver acquires the AIT including start information of an application which operates independently through communication. The independent application is acquired from a known application repository. A procedure until start information of an individual independent application is acquired is shown as follows.

(1) A location of the application repository is set in the receiver. The location may be preset at a factory and a plurality of repositories may be added later through any method.
(2) When an application menu is open, the receiver acquires a list of applications (including a location description of an AIT of each app), and displays the app in the menu.
(3) The AIT of an application selected by the viewer is acquired from communication.

The above-described procedure is executed using a WEB API provided by the repository. In addition, because an application that operates independently does not operate in cooperation with the AV contents, dynamic life cycle control at a preset timing is not performed. The control (end or the like) at a timing not designated in advance is performed according to a notification by a push via communication.

[2.3 Start and end of application]

[2.3.1 Life cycle of application]

[2.3.1.1 Life cycle]

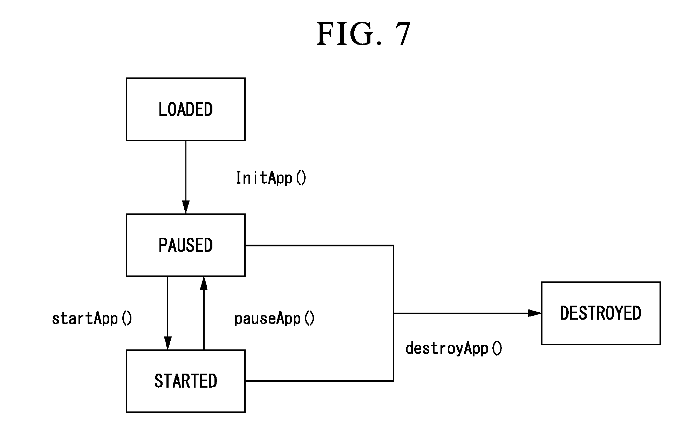

Fig. 7 is a diagram illustrating a life cycle of an application.
Application states are based on those in ARIB-J, and are five states of "Not Loaded (before loading)," "Loaded (after loading)," "Paused," "Started," and "Destroyed." In these five states, a series of processes until the application is loaded, executed, and ended are referred to as a life cycle of the application, and control of the transition between states is referred to as life cycle control.

[2.3.1.2 Basic life cycle control of application cooperating with AV contents]

The control of the life cycle of the application cooperating with the AV contents is based on the fact that the control is performed through selection of a stream-dependent service.
The viewer selects the stream-dependent service. The service is a set of a series of pieces of contents including AV contents or an application, and a life cycle such as a start or an end is controlled using a control code included in an AIT to be transmitted along with the application. A plurality of applications may be included in one service and operate at the same time.
When the service selection serving as a trigger of an application start is controlled from an application through a receiver API or controlled from a navigator serving as a resident application of the receiver, a remote button may be controlled in the case of a broadcast service. At the time of service switching, presentation of contents (AV contents or applications) included in services before and after the switching is switched. When applications included in the services before and after the switching are different, the application started before the switching ends through service switching and a different application can start after the switching. Details of these operations will be described later in Section 2.4.

[2.3.2 Start of application]

[2.3.2.1 Start by AIT]

When the service (stream-dependent service or independent service) has been selected in the receiver, an application in which "auto-start" has been designated automatically starts along with the service selection without explicit action from the viewer in a control code included in an AIT provided along with the service. During the service selection, the life cycle is controlled by application signaling for the service. For example, in the case of the broadcast service, the receiver constantly monitors the AIT transmitted along with the broadcast and copes with its changes. In this manner, it is possible to control a new application in the receiver to auto-start in the middle through application signaling such as transmission of the AIT.

In application start information according to the AIT, an application in which "auto-start" is not designated is not automatically started but needs to be explicitly started by the viewer. This explicit start is performed by an application launcher of a resident application of the receiver. For example, at the time of broadcast service selection, by pressing a broadcasting/communication cooperation service button of a remote controller, a menu for starting the application in the receiver is opened and a list of applications cooperating with a current broadcast (communication) service is displayed. Here, the viewer performs an operation of selecting/starting a desired application to be started for the receiver.

[2.3.2.2 Start from broadcasting/communication cooperation application]

Because it is possible to start a plurality of applications within a service, another application included in the same service from the started application may be started. In an ARIB-J application execution environment, an API for starting another application is specified by designating an application ID. Even in the case of another execution environment, an API having a similar function is specified.

[2.3.2.3 Start from Broadcast Markup Language (BML)]

Because the receiver includes an execution environment of a current BML data broadcast in addition to a broadcasting/communication cooperation application execution environment, an API for controlling the start of the broadcasting/communication cooperation application is added as an API of the BML. The BML is a multimedia encoding scheme specified in ARIB STD B24, and is adopted as a data broadcasting scheme in current Japanese terrestrial/ broadcast satellite (BS)/communication satellite (CS) digital broadcasting.

[2.3.2.4 Start of application which operates independently]

An independent service is a virtual service including only an application, and the application is started by acquiring an AIT according to the same mechanism as in the start according to the AIT of Section 2.3.2.1 by selecting an independent application. However, in the independent service, at least one auto-start application starts. The selection of the independent service, for example, is performed from an application launcher.

[2.3.3 End of application]

[2.3.3.1 End by AIT]

In the started application, a life cycle is controlled by application signaling for its service. For example, in the case of the broadcast, the receiver constantly monitors the AIT transmitted along with the broadcast and designates control code destroy for the application during the start, thereby ending the application. Even when the AIT is multiplexed into the stream-dependent service to be transmitted in communication, cooperation application end control is possible.

[2.3.3.2 End by application itself]

The application ends itself using an end API.

[2.3.3.3 End by other application]

Using the application end API to be executed by the application, the other application is caused to end during the start. In this case, an appropriate security policy for ending the other application is necessary.

[2.3.3.4 End at time of switching to separate service]

At the time of switching to the separate service in the receiver, an application included in the service before the switching among applications included in the stream-dependent service ends, and an application signaled in a new service starts. When the same application is included in the services before and after the switching, it is also possible to continue the operation. This is controlled in a graph in the AIT. Details of a service bound application which is an application included in a stream-dependent service will be described later in Section 4.2.

[2.3.3.5 End by receiver]

The receiver ends the designated application according to a reception function. For example, the receiver displays an application list during the start, and ends an application of designation through selection of the viewer.

[2.3.3.6 Dynamic application end]

To dynamically control the end of the application, a file of the AIT indicating the end of the application is transmitted to the receiver. In this case, an application notification of the AIT is provided.

[2.3.4 Start of plurality of applications]

[2.3.4.1 Application signaled within same service]

The receiver can simultaneously execute applications listed in the AIT in the same service.

[2.3.4.2 Simultaneous start of applications that operate independently of application cooperating with AV contents]

The application cooperating with the AV contents starts only within the stream-dependent service. On the other hand, the application that operates independently can operate simultaneously with an application cooperating with the AV contents or another application operating independently at an arbitrary timing.

[2.3.4.3 Resource management upon starting plurality of applications]

When the plurality of applications start, they may require a resource (for example, a display) of the same receiver. The receiver performs an operation of appropriately allocating a resource by including a mechanism such as a resource manager or stopping the execution of an application when no resource is available or the like.

[2.4 Boundary of application]

[2.4.1 Bound/unbound basic treatment]

There are two types of applications including a bound application linked (associated) with an organization service and an unbound (unassociated) application. An organization service linked with the bound application is determined by the organization service from which the AIT including application start information is obtained.
The bound application is in an executable state when a linked organization service is received. That is, the bound application is started by the AIT from the organization service and ended when reception of the organization service has ended (the received organization service has been changed). Another application started from the bound application is also treated as a bound application. When an initially started application that is a base of a series of associated bound application groups ends, another application started by the initially started application also ends.
Because the unbound application is not linked to the organization service, the execution of the application continues even when the received organization service is changed. Because it is difficult to obtain the AIT for starting the application from the organization service, another means (for example, a process of obtaining an AIT file linked to the application using an application launcher or the like) provides start information to the receiver, and a start operation is performed. A separate application started from the unbound application is also treated as an unbound application. Although a process in which the application explicitly ends according to an operation of the viewer is basic, the application also ends when an instruction (KILLALL) for ending all applications from a received organization service is given by the AIT.

[2.4.2 Treatment unique to unbound application]

Although the unbound application is not linked to the organization service, the same start processing mechanism as in the bound application is applicable by linking it to a virtual organization service (generated within the receiver when the receiver starts) as shown in Section 2.3.2.4.
A method of generating a virtual organization service depends upon implementation of the receiver, and an identification value given to the organization service differs according to the implementation of the receiver. However, when a start process is enabled from an application launcher at an arbitrary timing at which an application file is accumulated within the receiver, it is necessary for the receiver to update contents of the AIT so that an ID for identifying the virtual organization service, an application file acquisition destination (a change is necessary for acquisition from an accumulation region within the receiver because the service is described as an acquisition destination in the AIT acquired from the service provider server or the repository), etc. conform to the receiver implementation.

[2.5 Application acquisition method]

[2.5.1 Acquisition based on AIT]

As described above, start information of all applications is given by the AIT.
The acquisition of the application file is indicated by location information of the application included in the AIT. For example, the location information in the example of Fig. 3 is described in a layer of "/ApplicationList/Application/applicationSpecificDescriptor/dvbjDescriptor/location" (described as contents of a location element in XML). The description of the location information, for example, is http://192.168.11.37/demo.jar.
The above description is an example in which demo.jar (an application archive of Java (registered trademark)) is acquired using a hypertext transfer protocol (HTTP). A transport protocol or an application package format to be used will be described later.

[2.5.2 Package format of application]

The package format of the application depends upon an application format (Java (registered trademark) or hypertext markup language 5 (HTML5) or the like. The receiver acquires a series of files (a program main body, an image file, or the like) necessary to start the application by acquiring a file serving as a lump or an entry file. This series of files is an application file. For example, in the application file, formats such as a file (a zip file or the like) obtained by compressing a series of files, a Jar file (Java (registered trademark) execution environment), an entry HTML file (in the case of the HTML5 execution environment), and an independently specified entry file are used.

[2.5.3 Application transmission method]

In a transmitting method when an application file is acquired via a network, there are acquisition by an HTTP protocol and acquisition by an FILE protocol.
In the case of the acquisition by the HTTP protocol, the acquisition is performed by a GET method. The location designation of the AIT is set as http://-.
On the other hand, in the case of acquisition of the FILE protocol, the location designation of the AIT is set as "file:///-" when an application file (application program) locally saved (installed) in the receiver is designated.

[3. I/F conditions]

[3.1 Broadcasting/communication cooperation service control signal of broadcast waves]

In the broadcast waves, the mechanism for transmitting application start information described in Section 2.2.2 is necessary. Further, in order to forcibly end all applications by assuming an early warning system (EWS) time or the like, "KILLALL" is added to an application control code (application_control_code) of the AIT specified in ARIB STD-B23 Part 2 Section 10.16.3.2. Table 1 shows the description of the added control code "KILLALL."

[Table 1]

| Code | ID name | Description |
|------|---------|-------------|
| 0x08 | KILLALL | All applications end regardless of cooperation/non-cooperation. In ARIB-J, a destroy method is called within Xlet in a state in which an unconditional parameter is true. In an HTML5 browser, etc., the browser forcibly ends without displaying a dialog for asking a user about permission/denial of the end. |

In addition, in order to control the presentation of the application from the relationship between the application and AV contents, a descriptor is added to EIT and AIT. Details will be described later in Section 4.3.

[3.2 Broadcast station server group API]

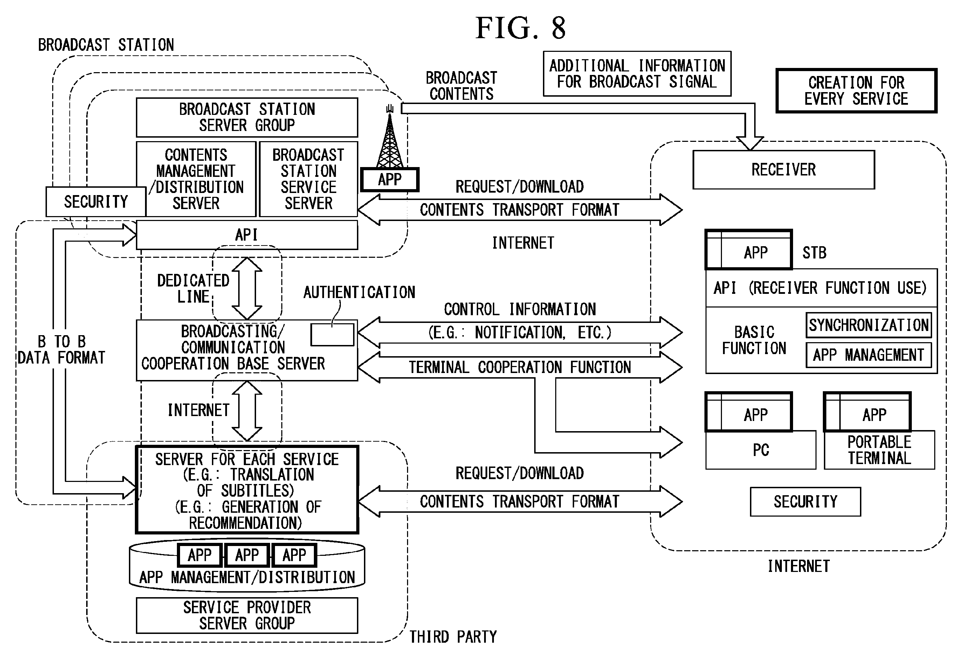

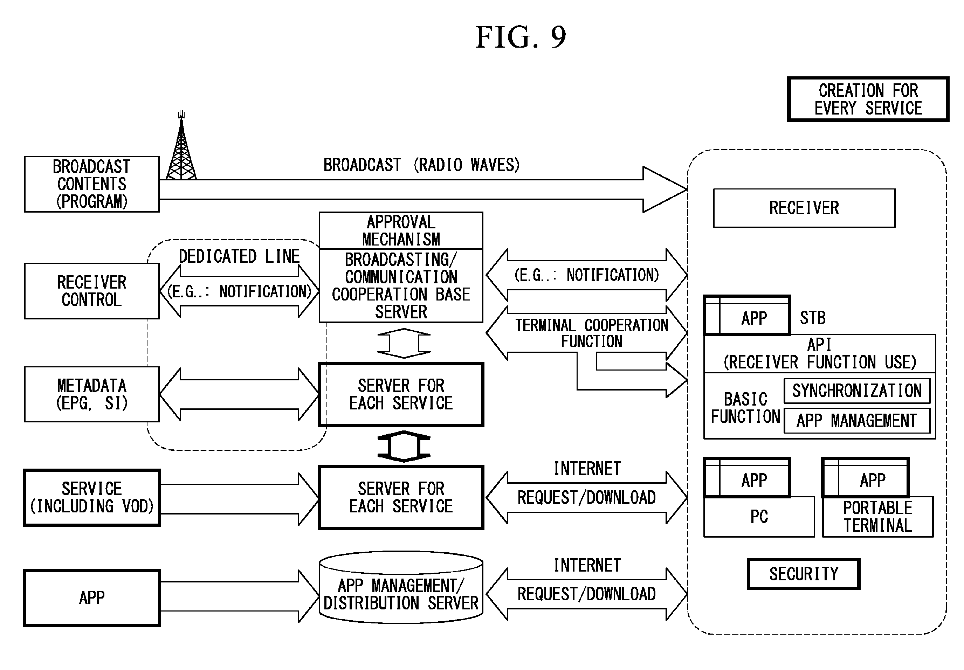

Fig. 8 is a diagram illustrating a flow of data between providers in the broadcasting/communication cooperation system, and Fig. 9 is a diagram illustrating a flow of data in the overall broadcasting/communication cooperation system.

Here, a process of specifying APIs between a broadcast station server group and a server of each service of a service provider server group, between the broadcast station server group and a broadcasting/communication cooperation base server, and between the broadcasting/communication cooperation base server and the server of each service of the service provider server group illustrated in Fig. 8 and APIs between receiver control and a broadcasting/communication cooperation base server and between metadata and a server of each service illustrated in Fig. 9 will be described later.

[3.2.1 API]

Communication between a broadcast station server which is each server constituting a broadcast station server group and a service provider server which is each server constituting a service provider server group is performed in the format of REST. In addition, because a directory configuration of a server is expected to differ according to a service to be provided between the broadcast station server and the service provider server, an API is determined between the two sides. An example of URLs of the broadcast station server and the service provider server will be shown hereinafter.
http://hybridcast.org/{broadcast station name}/{server name}/{content ID}/{data to be managed}/{sort method}/{first item},{number of pieces}/?{parameter} = {value}/

[3.2.2 Recommendation service]

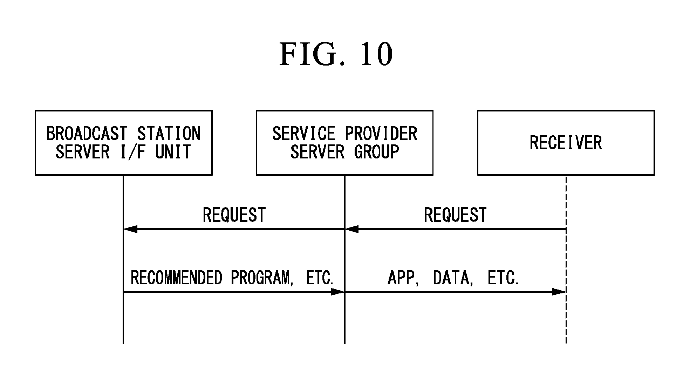

Fig. 10 is a diagram illustrating a sequence of a recommendation service. Methods used between the service provider server group and the I/F unit of the broadcast station server are "GET," "POST," "PUT," and "DELETE." An example of a command format is shown hereinafter.
(1) http://hybridcast.or.jp/{broadcast station name}/(server name)/{content ID}/{data to be managed}/{sort method}/{first item},{number of pieces}/
(2) http://hybridcast.or.jp/{broadcast station name}/(server name)/{viewer ID}/{data to be managed}/{sort method}/{first item},{number of pieces}/
(3) http://hybridcast.or.jp/{broadcast station name}/(server name)/{review ID}/{data to be managed}/{sort method}/{first item},{number of pieces}/

In addition, parameters are {broadcast station name}, {server name}, {content ID}, {viewer ID}, {review ID}, {data to be managed}, {sort method}, {first item}, {number of pieces}, etc.

[3.2.3 Data to be managed]

The data to be managed is contents information, user information, user-generated contents information, device information, and authentication information.
The contents information includes data representing a title, an outline, a genre, a broadcasting date, a broadcasting time (scale), a video mode, an audio mode, subtitle data, a script, a performer, music, a producer, a production company, a copyright, a recommended program, a moving-image uniform resource identifier (URI), the number of reproductions, a commercial message (CM), timestamp information, etc. The user information includes data representing a name, age, sex, a region, the number of review writings, the number of comment writings, favorites, a friend list, a reproduction place (time), a reproduction end place (time), a program viewing history of a user (viewer), etc. The user-generated contents information includes data representing a contents ID, a user ID, review contents, a review writing time, review evaluation, etc. The device information includes a device ID. The authentication information includes an authentication ID.

[3.3 Transport format]

[3.3.1 Video/audio to be handled in communication]

The video or audio to be handled in communication is based on protocol edition V1.1 (Digital TV information Research) of a streaming function spec among digital TV network function specs.

[3.3.1.1 Relationship with mono-media format of video/audio]

A time-stamped transport stream (TTS) format is used to multiplex video encoded by MPEG-2 Video or H. 264/MPEG-4 advanced video coding (AVC), audio encoded by MPEG-1 Audio Layer II or MPEG-2 Audio advanced audio coding (AAC), subtitles, etc. However, MPEG2-TS, MPEG media transport (MMT), MP4, etc. are also available.

[3.3.1.2 Transport protocol relationship]

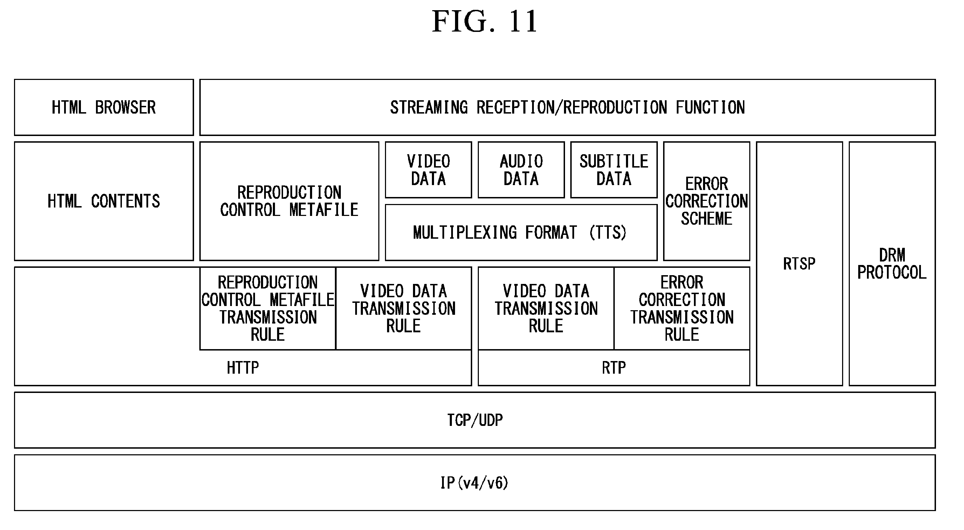

Fig. 11 is a diagram illustrating a transmission protocol stack.
Stream transmission uses a real-time transport protocol (RTP)/user datagram protocol (UDP) and an HTTP/ transmission control protocol (TCP). When the RTP/UDP is used, error correction information may be transmitted as an option. In addition, when the HTTP/TCP is used, stream control is performed using a connection, a method, and a header of the HTTP. When the transmission is performed in the RTP, stream control information uses a real time streaming protocol (RTSP).

[3.3.2 Subtitle relation]

Multilingual subtitles are based on Timed Text Markup Language (World Wide Web Consortium (W3C)). Synchronization is executed at a separate application level. In addition, each corresponding font is downloaded according to need from the server. For example, a font file is placed in an HTTP payload. In this case, dynamic fonts of a web and a portable font resource (PFR) are used.
It is desirable for a font capacity to be about 5 to 35 megabytes (MB).

[3.4 Mono-media format]

The following defined encoding is used as mono-media encoding in the broadcasting/communication cooperation service.

[3.4.1 Moving image]

In the moving image, a constraint condition of an encoding parameter of a TV service specified in Section 5.1 of ARIB STD-B32 Version 2.4 Part 1 in which an MPEG-2 Video scheme specified in Section 3.1 of the same and an MPEG4-AVC scheme specified in Section 3.2 of the same are used is applied.

[3.4.2 Audio]

MPEG-2 Audio or pulse code modulation (PCM) (Audio Interchange File Format compression (AIFF-C)) is used in the audio.
In the case of MPEG-2 Audio, a constraint condition of an encoding parameter specified in Chapter 5 of ARIB STD-B32 Version 2.4 Part 2 in which an MPEG-2 AAC scheme specified in Section 3.1 of the same is used is applied.
In the case of PCM, a scheme specified in ARIB STD-B24 Version 5.4 Volume 1 Part 2 Section 6.2 is used.
In an additional sound, a scheme specified in ARIB STD-B24 Version 5.4 Volume 1 Part 2 Section 6.4 is used.

[3.4.3 Still image]

In the case of Joint Photographic Experts Group (JPEG), an encoding scheme specified in ARIB STD-B24 Version 5.4 Volume 1 Part 2 Section 5.2 is used.
In the case of Portable Network Graphics (PNG), a scheme specified in International Organization for Standardization/International Electrotechnical Commission (ISO/IEC) 15948: 2003 is used. This is the same contents as in W3C Recommendation PNG Specification (Second Edition).

[3.4.4 Characters]

In character encoding, a universal encoded character set specified in ARIB STD-B24 Version 5.4 Volume 1 Part 2 Section 7.2 is used.
In a character code set, a Basic Multilingual Plane (BMP) set specified in Section 7.2.1.1.3 of the same is used and Table 7-20 is applied. In addition, Supplements 5 and 6 of ISO/IEC 10646: 2003 are applied.
A scheme specified in ARIB STD-B24 Version 5.4 Volume 1 Part 2 Section 7.2.1.2, a scheme specified in ARIB STD-B23 Part 1 Section 5.2.1.2, etc. are applied to external characters.

In control codes, only APR (CR) and APD (LF) are used among C0 control codes specified in ARIB STD-B24 Version 5.4 Volume 1 Part 2 Section 7.2.2.1. Other C0 and C1 control codes are not used.

Character code conversion follows ARIB STD-B24 Version 5.4 Volume 1 Part 2 Annex E.

When information is encoded in a scheme other than a character encoding scheme specified in the above description, conversion is performed in the above-described character encoding scheme in transmission or an appropriate process within the receiver and a process is performed. That is, character encoding by another encoding scheme is not directly handled from an application.

[3.5 Application format]

A method of describing an application executable on the receiver is shown. A combination of an execution environment for executing an application created by the description method and a secure manager is shown in Chapter 4.

[3.5.1 Application format executable in receiver]

As a scheme of describing an application executable in the receiver, BML (ARIB STD-B24), ARIB-J (ARIB STD-B23), and HTML5 (W3C HTML5 Working draft - 2011 /Jan/13) are specified.

[3.5.2 BML]

The receiver has a function of presenting a BML document based on operational guidelines for terrestrial digital broadcasting (ARIB TR-B14) or operational guidelines for BS digital broadcasting (ARIB TR-B15).

The receiver should be able to present a data broadcast service provided by terrestrial digital broadcasting or BS digital broadcasting as in an existing standard. However, the receiver includes only the presentation of BML contents distributed according to a data carousel scheme in broadcasting as essential presentation, and does not include the presentation of BML contents (TR-B14 Volume 3 Part 2 Section 5.14 or TR-B15 Volume 3 Part 1 Section 8.14) provided according to the HTTP protocol in communication as essential presentation.

In addition, browser.startHybridcastApp() and getAITInfo() are specified as broadcast extension APIs for starting the following specified communication application based on data broadcast contents (BML).

Table 2 shows the provision of browser.startHybridcastApp(). browser.startHybridcastApp() is an API for starting a broadcasting/communication cooperation application.

[Table 2]

| Grammar | Number startHybridcastApp(input String applicationURL, input Number applicationType, [input String returnURL]) |
|---|---|
| Argument | applicatoinURL: URL of an application<br>applicationType: Constant indicating a type of application<br>returnUTL: Return when an application ends |
| Return value | Value representing an execution result |
| Description | The presentation of a BML document ends according to execution of this function, and the presentation of the designated application starts. |

Table 3 represents the provision of getAITInfo(). getAITInfo() is an API for acquiring the latest AIT information included in the service during reception.

[Table 3]

| Grammar | Array getAITInfo(out Array) |
|---|---|
| Return value | Array[0]: Value representing an acquisition result.<br>        Array[1]: Array (*1) storing information of an application 1<br>        Array[2]: Array storing information of an application 2<br>        Array[n]: The following is iterated<br>*1) The format of Array storing application information is as follows. |

(continued)

| | | Array[0]: Application ID |
| --- | --- | --- |
| | | Array[1]: URL of an application |
| | Description | Latest AIT information included in a service during reception is acquired. |

[3.5.3 HTML5]

[3.5.3.1 Description method]

The receiver supports HTML5 as the description scheme of a presentation engine type application to be provided from communication. As JavaScript (registered trademark) API, the following is supported. Among the following APIs, working draft (WD) or editor's draft (ED), which are being investigated by the W3C, are included. However, an API associated with a data carousel transmitted by broadcast waves is not essential.
(1) System Information API (W3C Working Draft 02 Feb. 2010)
(2) WebSocket API (W3C Editor's Draft 28 Feb. 2011)
(3) File API (W3C Working Draft 26 Oct. 2010)
(4) Permission for File API, System Information API (Permissions for Device API Access, W3C Working Draft 05 Oct. 2010)
(5) Device Description Repository Simple API (W3C Recommendation 05 Dec. 2008)
(6) API for Media Resource 1.0 (W3C Working Draft 08 June 2010)
(7) Web Storage (W3C Working Draft 08 Feb. 2011)
(8) Server-Sent Events (W3C Editor's Draft 28 Feb. 2011)
(9) Indexed Database API (W3C Working Draft 19 Aug. 2010)
(10) SI Access API
(11) Channel selection API
(12) Print
(13) Reserved

[3.5.3.2 Browser]

An HTML5 browser of the receiver implements functions of a JavaScript (registered trademark) processing system, Web Workers (W3C Working Draft 08 Feb. 2011), Widget Interface (W3C Working Draft 3 Feb. 2011), and HTML Canvas 2D Context (W3C Editor's Draft 28 Feb. 2011). The web workers are necessary to support multitasking, the widget interface is necessary to support an independent application, and the HTML canvas 2D context is necessary to support two-dimensional vector graphics.

[3.5.4 ARIB-J]

The receiver supports ARIB-J as the description scheme of an application execution engine type application to be provided from communication. In addition, DVB Bluebook A153 (GEM Media Synchronization API) is used as a synchronization API among a plurality of streams.

[3.6 Receiver API]

Hereinafter, the receiver API available in HTML5 and ARIB-J will be described.

[3.6.1 Namespace]

The namespace is a description rule of a character string for specifying positions of variable resources to be handled in a broadcasting/communication cooperation system such as video/audio contents, an application, and a mono-media file on the server or within the receiver. The notation of the namespace for referring to various resources used after Section 3.5.2 is specified for each classification. The resources are resources on an Internet server, resources on an application cache, and broadcast resources. The resources on the Internet server are stream resources such as VOD contents, an application, and file resources such as an application and other resources to be referred to from the application. The broadcast resources are stream resources such as a program during broadcasting and past and future programs and carousel resources such as a module and an event message.

[3.6.2 Broadcasting/communication cooperation I/Fs]

The broadcasting/communication cooperation I/Fs are the following I/Fs.

(1) getRunningApplications(): Information of a running application is acquired. A return value of getRunningApplications includes apps[], application_id of each application, and running_level. In apps[], a list of running applications is set. In application_id, an application ID is set and is null when the application is unofficial. In running_level, an execution level (an authentication result and a state of a viewer setting) is set.
From a viewpoint of security, information capable of being acquired in relation to other applications should be limited.
(2) queryApplicationInfo(): Information of a designated application is acquired.
(3) getProgramInfo(): Information of a broadcast during reception is acquired. The return values are tuner_state, network_id, ts_id, orig_ts_id, service_id, event_id, and contents_id. In tuner_state, a value representing a reception state is set.
(4) getEPGInfo(): Various information of EIT (+SDT) of a broadcast during reception is acquired.
(5) saveApplicationToCache(): An application file on the server is saved on the cache.
(6) queryApplicationInCache(): An application file (application program) is retrieved from the cache. Arguments of queryApplicationInCache() are application_id, getDSMCCModule(), addBroadcastSignalListener(), and getListFromHybridcastMenu(). In application_id, an application ID issued from an authentication authority is set. getDSMCCModule() represents that a designated module is acquired from broadcast waves. addBroadcastSignalListener() represents that a listener for monitoring the update of SI, emergency information, a carousel, and an event message is registered. getListFromHybridcastMenu() represents that a list of top menu applications is acquired. Return values of queryApplicationInCache() are user_apps[], broadcaster_apps[], and vendor_apps[].
(7) addApplicationToHybridcastMenu(): An application is added to the top menu.
(8) getKeyFromBroadcast(): Key information for limited server access is acquired from a broadcast.
(9) querySupportedFunction(): A function of an application browser is queried. This is used as the purpose of checking that a function/API is available.

[3.6.3 BroadacastSignalListener I/F]

The BroadcastSignalListener I/F is a listener I/F for monitoring SI, emergency information, a carousel, and an event message acquired from a broadcast. While a bound application is executed, this I/F event is generated even when a linked organization service has been changed.

[3.6.4 LocalDatabase I/F]

The LocalDatabase I/F is an I/F for holding/managing viewer information within the receiver. The viewer information is information which is not output to a server side, such as personal information, and is minimum information such as a viewer ID and a receiver ID.

[3.6.5 Synchronization-related API]

As a SynchronizationManager I/F, the same API as DVB Bluebook A153 (GEM Stream Synchronization API) is introduced. Further, the following I/F is added as the API.
(1) getCurrentSTC(): A current system time clock (STC) value is acquired. In the standard of MPEG 2 systems, the system clock (STC) inside the receiver is specified to be synchronized with the STC of a transmitting side by multiplexing and distributing the system clock (STC) of the transmitting side as a program clock reference (PCR) signal in an MPEG2 transport stream.
(2) getCurrentPositionInProgram(): A passage time from a program start is acquired.
(3) delayStreamPresentation(): The delayed presentation of a broadcast stream during presentation starts.
(4) getCurrentDelay(): A delay time amount of a broadcast stream (from an original presentation time) during presentation is acquired.

[3.6.6 SecurityException I/F]

This I/F is an exceptional I/F generated when an application has performed function call and property operations prohibited at a current execution level. The ecurityException I/F is generated according to calling of each API described above or various operations on an object for referring to a broadcast (<video> for HTML5 and OO controller for ARIB-J).

[3.7 Receiver function]

The receiver of the broadcasting/communication cooperation system includes an application launcher as the receiver function. The application launcher is used in the start of an application accumulated in the receiver, the selection of an independent application from a known repository, and the selection of an application in which a control code is "PRESENT" among applications in which a start instruction has been described according to the AIT.

[4. Security]

[4.1 Management of broadcasting/communication cooperation application]

In order to spread/activate the broadcasting/communication cooperation service while satisfying requirements of a broadcast provider, a framework in which a wide range of service providers or individuals as well as a broadcast provider and its related party can participate is necessary. In this broadcasting/communication cooperation system, applications are classified into "official applications" and "unofficial applications" from the viewpoint of security, and the two types of applications can be executed in the receiver.

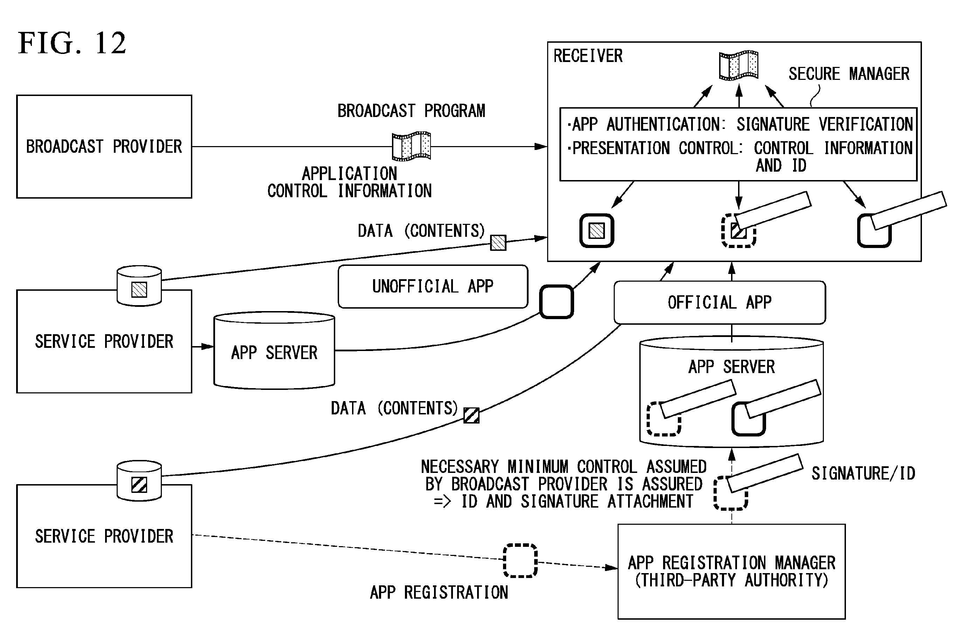

Fig. 12 illustrates an application management model in the broadcasting/communication cooperation system. In the "official application," an operation expected in specs of the broadcasting/communication cooperation system is assured by performing pre-registration for a registration manager (third-party authority). The "official application" is configured so that an ID and a signature are given at a registration time, the signature is verified by a secure manager defined in Section 2.2 in the receiver, access to all APIs is possible, and a program cooperation service using a broadcast resource is provided. In addition, detailed presentation control according to requirements of the broadcast provider is enabled according to the AIT transmitted from the broadcast provider.

On the other hand, in the "unofficial application," pre-registration is unnecessary, but an operation expected in specs of the broadcasting/communication cooperation system is not ensured, and it is difficult to handle a broadcast-related API from the application. Because an ID and a signature are not given in the "unofficial application," it is difficult to designate an individual application, but it can be executed after a presentation limitation based on the requirements of the broadcast provider is applied.

[4.2 Functional model of security manager]

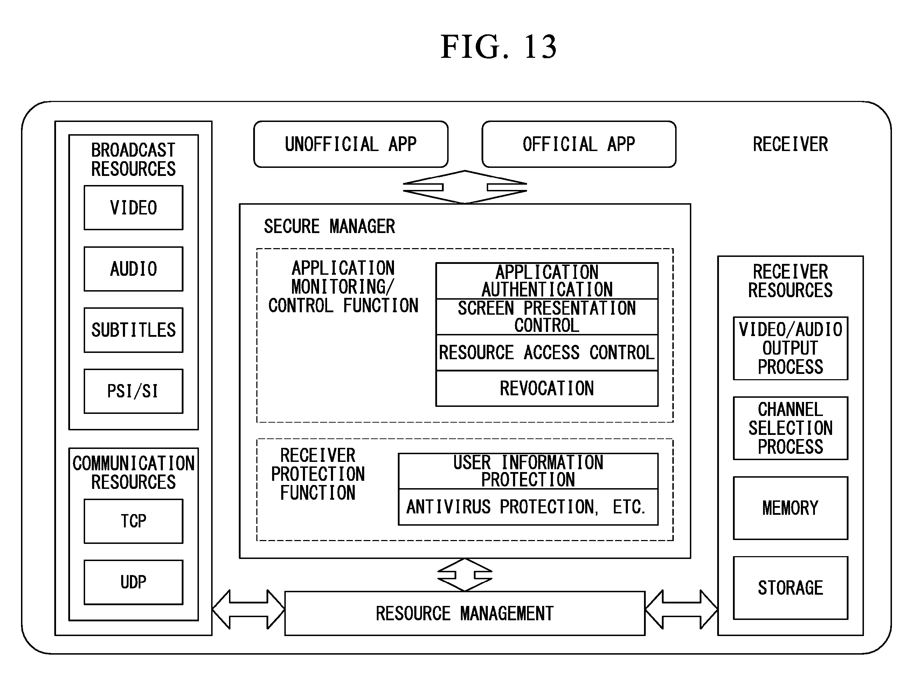

Fig. 13 illustrates a functional model of a security manager. The security manager has a function of managing security in an integrated manner in the receiver.

[4.2.1 Application monitoring/control functions]

The applications that operate in the receiver are roughly classified into two types of "official application" and "unofficial application" as described above according to a type of distribution of an application file. The "official application" and the "unofficial application" are distinguished according to the presence/absence of an ID and a signature as shown in Section 4.1, and operation contents at an application execution time are different such as that an access range of an API in the receiver or a control range from the broadcast provider is different. The application monitoring/control function has the purpose of identifying a difference in an official/unofficial type and reliably controlling an operation at the time of application execution.

(1) Application authentication: The receiver determines whether an application is official or unofficial for all applications to be executed, and further identifies an ID if the application is official. The distinction between the official and the unofficial is performed by checking and verifying the presence/absence of the signature assigned to the application file (application program). In the official case, the receiver further acquires an application ID described in the signature. The application is identified when the application is acquired or started.

(2) Screen presentation control: This will be described later in Section 4.3.

(3) Resource access control: The receiver performs access control for the API such as a broadcast resource of a running application. When the application is set to access the API, the access is limited according to a type of API if the application is the unofficial application.

In addition, when the application accesses a screen display API for a display, screen presentation control is executed based on an official or unofficial type and a presentation policy of a broadcast provider in process of channel selection. Details will be described later in Section 4.3.

(4) Revocation: A revocation function of the application is provided.

[4.2.2 Receiver protection]

The receiver includes protection functions such as viewer information protection, antivirus protection, etc.

[4.3 Screen presentation control of application]

[4.3.1 Outline of screen presentation control]

In the broadcasting/communication cooperation service, it is possible to extend the convenience of a broadcast service by presenting a communication application simultaneously associated with a broadcast program. On the other hand, a process in which a broadcast program and a communication application are mixed and presented on the screen of the receiver using a communication service is assumed. According to the presentation method, there is concern that a communication application screen may overlap a broadcast program, uniqueness or work characteristics of a broadcast program may be lost, and information with high urgency such as an EEW may not be accurately transferred to the viewer. According to screen presentation control, application presentation control is performed based on an intention of the broadcast provider in the broadcasting/communication cooperation service.

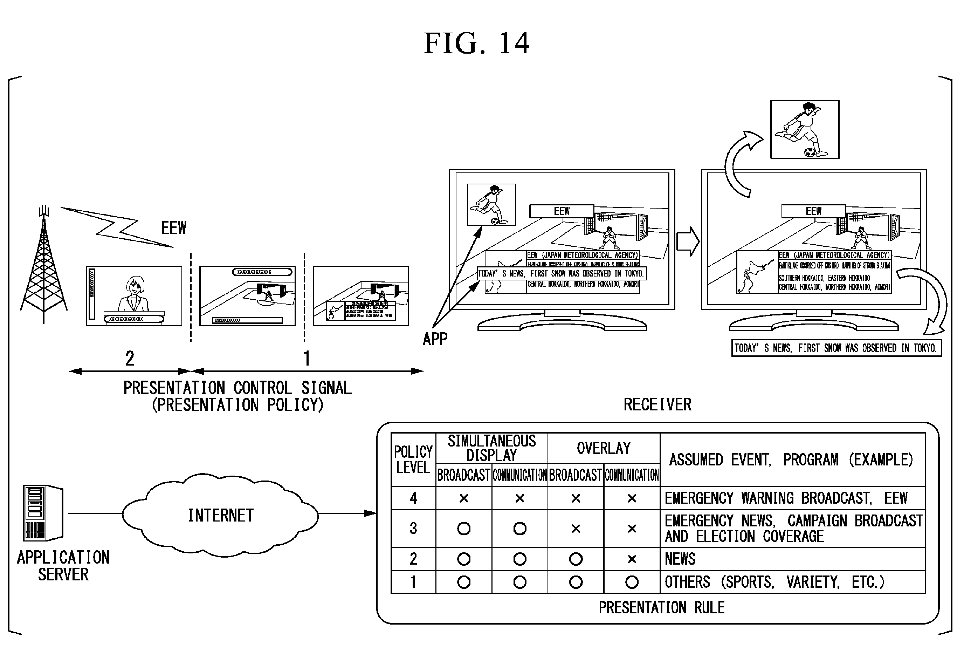

Fig. 14 is a diagram illustrating a concept of a screen presentation control scheme. Because the screen presentation control scheme is intended to reflect a presentation policy of the broadcast provider representing a method of presenting a communication application on the screen for an individual broadcast program in the receiver, this is referred to as contents presentation control. In the contents presentation control, presentation control of a program unit corresponding to organization, presentation control for an event generated in a program such as an EEW, and presentation control of an application unit are implemented.

[4.3.2 Basic operation of screen presentation control]

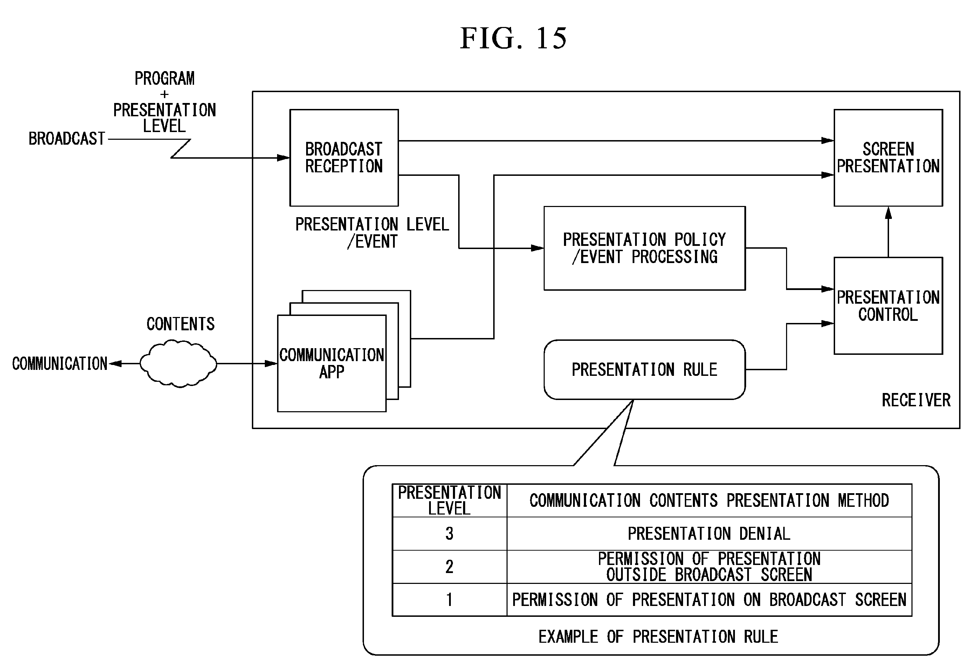

Fig. 15 is a diagram illustrating a basic operation model of screen presentation control. In order to reflect the presentation policy of the broadcast provider in the receiver, a method of presenting communication contents for a broadcast program in which the broadcast provider has been assumed in advance is managed as a presentation rule in the receiver. Specifically, as a method of presenting communication contents, level classification is performed according to a difference in order of superimposition or an arrangement method, and a table of a presentation level (policy level) and a presentation method is held as a presentation rule within the receiver. The broadcast provider multiplexes a designated presentation level into broadcast waves to transmit a multiplexing result, and the receiver matches the presentation level with the presentation rule to determine a presentation method. Thereby, it is possible to implement presentation control based on a presentation policy of the broadcast provider.

[4.3.3 Control information transmission/multiplexing scheme]

In relation to a format of control information in which the presentation policy of the broadcast provider is transmitted, three specific examples are included as a scheme using program array information used in a digital broadcast. As screen presentation control in the program unit, there are a scheme using an existing event information table (EIT) and a scheme (EIT+) used by extending the EIT. In addition, there is a scheme used by extending the AIT of a broadcast signal as screen presentation control in units of services (channels). Further, there is a scheme using information transmitted from the broadcast station other than program array information as screen presentation control in an event unit generated in real time in a program. Hereinafter, details of four schemes will be described.

(1) EIT program genre (EIT): A policy level is determined from a program genre described in a content descriptor of an existing EIT. Because of this, the receiver manages a correspondence table of a program genre and a policy level. The relationship with the ARIB standard is shown in ARIB STD-B10 Part 2 Section 6.2.4 Annex H.

Table 4 represents a specific example of a relationship between a program genre and a policy level. The program genre (program_genre) is configured in two steps of "contents_nibble_level1" (0x0 to 0xF) representing large classification and "contents_nibble_level2" (0x0 to 0xF) representing middle classification. The table managed in the receiver targets up to a genre of the middle classification, and defines each policy level value.

[Table 4]

| program_genre<br>(content_nibble_level1-content_nibble_level12) | policy_level<br>(1 to 4) |
|---|---|
| 0x0-0x0 | 3 |
| 0x0-0x1 | 1 |
| ... | |
| 0x0-0xF | 1 |
| ... | |
| 0xF-0xF | 1 |

(2) Addition of a new descriptor to the EIT (EIT+): A new descriptor is added to an event information section of the EIT, and policy information is described. The receiver implements control corresponding to a policy level in units of programs by analyzing the descriptor and executing a desired process. The relationship with the ARIB standard is shown in ARIB TR-B14 (Fascicle 2) Part 3 Section 31.3 and ARIB STD-B10 Volume 2 Section 5.2.7.

Table 5 shows a structure of an event security descriptor. In the case of EIT+, the event security descriptor illustrated in Fig. 15 is newly defined and the event security descriptor is stored and transmitted in a descriptor field within the EIT. In the event security descriptor, a policy level (policy_level), an application ID (application_identifier), a control code (application_control_code), priority (application_priority), protocol identification (protocol_id), and a program-related flag (associated_application_flag) are set.

[Table 5]

| Data structure | Number of bits | Bit string |
|---|---|---|
| event_security_descriptor(){ | | |
|     descriptor_tag | 8 | uimsbf |
|     descriptor_length | 8 | uimsbf |
|     policy_level | 8 | uimsbf |
|     for (i=0; i<n; i++){ | | |
|         application_identifier() | | bslbf |
|         application_control_code | 8 | uimsbf |
|         application_priority | 8 | uimsbf |
|         protocol_id | 16 | uimsbf |
|         associated_application_flag | 1 | bslbf |
|         reserved_future_use | 7 | bslbf |
|     } | | |
| } | | |

policy_level represents a policy level in units of programs. The policy level has a value of 1 to 4. application_identifier() is an ID for identifying an application. Table 6 shows a structure of application_identifier().

[Table 6]

| Data structure | Number of bits | Bit string |
|---|---|---|
| application_identifier(){ | | |
|     organization_id | 32 | bslbf |
|     application_id | 16 | bslbf |
| } | | |

organization_id represents an organization creating an application, and has a value after 0x00000063. application_id represents a number for identifying the application. application_id is uniquely assigned within organization identification.

application_control_code specifies a control code for controlling an application state. Table 7 shows the provision of the control code.

[Table 7]

| Code | ID name | Description |
| --- | --- | --- |
| 0x00 | reserved_future_use | |
| 0x01 | AUTOSTART | Automatic start of an application |
| 0x02 | PRESENT | Standby of an application |
| 0x03 | DESTROY | End of an application |
| 0x04 | KILL | Forced end of an application |
| 0x05 | reserved_future_use | |
| 0x06 | REMOTE | Indirect application |
| 0x07 | DISABLED | Non-use of an application |
| 0x08 | KILLALL | Forced end of all applications |
| 0x09...0xFF | reserved_future_use | |

application_prority represents a policy level of each application. The policy level of each application represents relative priority among applications announced within a service. The priority has a value of 1 to 4.

protocol_id represents a protocol in which an application file is transmitted. Table 8 shows the provision of protocol_id.

[Table 8]

| Value | Description |
| --- | --- |
| 0x0000 | reserved_future_use |
| 0x0001 | Object carousel transmission protocol |
| 0x0002 | Reserved |
| 0x0003 | HTTP transmission protocol |
| 0x0004 | Data carousel transmission protocol |
| 0x0005...0xFFFF | reserved_future_use |

associated_application_flag represents whether an application cooperates with a program. Table 9 shows the provision of protocol_id.

[Table 9]

| Value | Description |
| --- | --- |
| 0 | No contents cooperating with a program is included |
| 1 | Contents cooperating with a program is included |

(3) AIT table definition and addition of a new descriptor to the AIT (AIT+): Policy information is transmitted by extending the AIT. The receiver implements control corresponding to a policy level for an occasionally generated event by analyzing this table and executing a desired process. The relationship with the ARIB standard is shown in ARIB STD-B23 Part 2 Section 10.16.

Table 10 shows a data structure of the AIT. The AIT shown in Table 10 is a table obtained by extending the data structure of the AIT specified in ARIB STD-B23. In the AIT, a policy level, an application ID, and a control code are described. The AIT is transmitted in the format of a section, and is constantly transmitted during event continuation. The application ID is described in application_identifier(), and the control code is described in application_control_code.

Details on these are substantially the same as those described in the EIT extension.

Further, in order to describe the policy level, a security policy descriptor is newly defined and stored and transmitted in a common descriptor loop of the AIT.

[Table 10]

| Data structure | Number of bits | Bit string |
|---|---|---|
| application_information_section(){ | | |
|    table_id | 8 | uimsbf |
|    section_syntax_indicator | 1 | bslbf |
|    reserved_future_use | 1 | bslbf |
|    reserved | 2 | bslbf |
|    section_length | 12 | uimsbf |
|    application_type | 16 | uimsbf |
|    reserved | 2 | bslbf |
|    version_number | 5 | uimsbf |
|    current_next_indicator | 1 | bslbf |
|    section number | 8 | uimsbf |
|    last_section_number | 8 | uimsbf |
|    reserved_future_use | 4 | bslbf |
|    common_descriptors_length | 12 | uimsbf |
|    for (i=-0, i<N; i++){ | | |
|      escriptor() | | |
|    } | | |
|    reserved_future_use | 4 | bslbf |
|    application_loop_length | 12 | uimsbf |
|    for (i=0; i<N; i++){ | | |
|      application_identifier() | | |
|      application_control_code | 8 | uimsbf |
|      reserved_future_use | 4 | bslbf |
|      application_descriptors_loop_length | 12 | uimsbf |
|      for (j=0; j<M; ;j++){ | | |
|        descriptor() | | |
|      } | | |
|    } | | |
| CRC_32 | 32 | rpchof |
| } | | |

Table 11 shows a structure of a newly defined security policy descriptor.

[Table 11]

| | Number of bits | Bit string |
|---|---|---|
| security_policy_descriptor(){ | | |
|    descriptor_tag | 8 | uimsbf |
|    descriptor_length | 8 | uimsbf |
|    policy_level | 3 | bslbf |
|    reserved_future_use | 5 | bslbf |
| } | | |

(4) EWS/EEW: A policy level is determined using emergency information transmitted from the broadcast station.

In the receiver, the emergency information is pre-associated with a policy level. The generation and end of the emergency information are sensed by monitoring an EWS start flag of transmission and multiplexing configuration control (TMCC) in the case of the EWS, and a text superimposition management packet in the EEW. At this time, it is possible to determine the policy level. The relationship with the ARIB standard is shown in ARIB STD-B31 Section 3.15 and ARIB STD-B24 Volume 1 Part 3 Chapter 9.

The schemes of the above-described (1) to (4) can be simultaneously transmitted in parallel. Therefore, it is necessary to determine a scheme in which transmitted data has priority to determine a policy level. The priority is as follows.

$$EWS/EEW > AIT+ > EIT+ > EIT$$

The receiver determines the policy level based on the priority, and screen presentation control in which an event in an emergency has priority based on the broadcast provider's intention is possible.

[4.3.4 Example of screen presentation control]

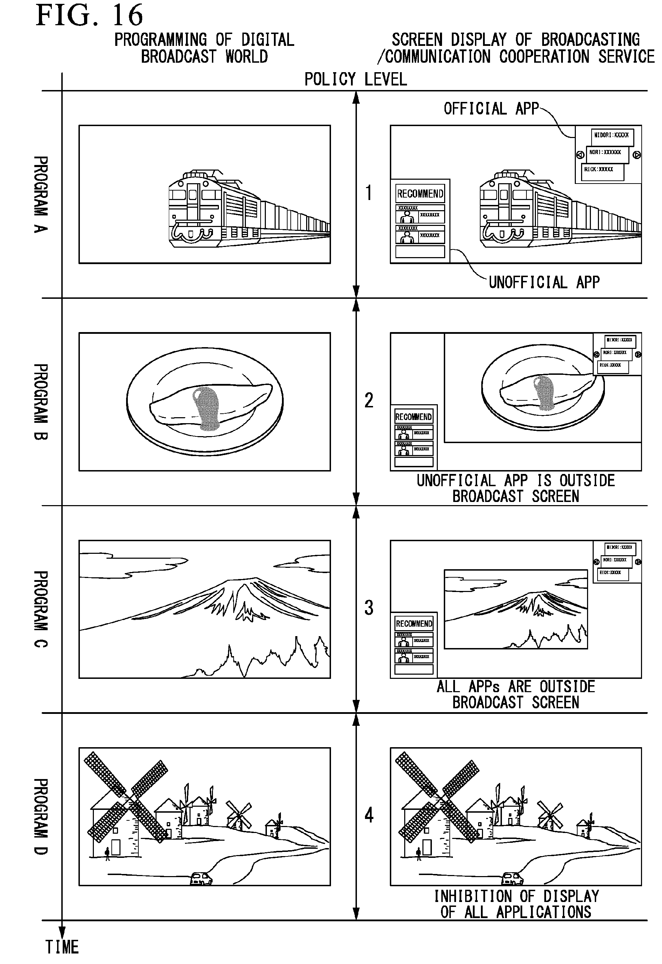

Fig. 16 illustrates an example of screen presentation control corresponding to a policy level.

When the policy level of the program is "1," the superimposition of both an application screen of the official application and an application screen of the unofficial application on a broadcast screen is permitted.

When the policy level of the program is "2," the superimposition of only the official application on the broadcast screen is permitted, and the superimposition of the application screen of the unofficial application on the broadcast screen is denied and only a display of the application screen of the unofficial application outside the broadcast screen is permitted.

When the policy level of the program is "3," the application screen of the official application and the application screen of the unofficial application are also permitted to be displayed, but the superimposition of all application screens on the broadcast screen is prohibited and only a display of all the application screens outside the broadcast screen is permitted.

When the policy level is "4," only the overall screen display of the broadcast screen is permitted.

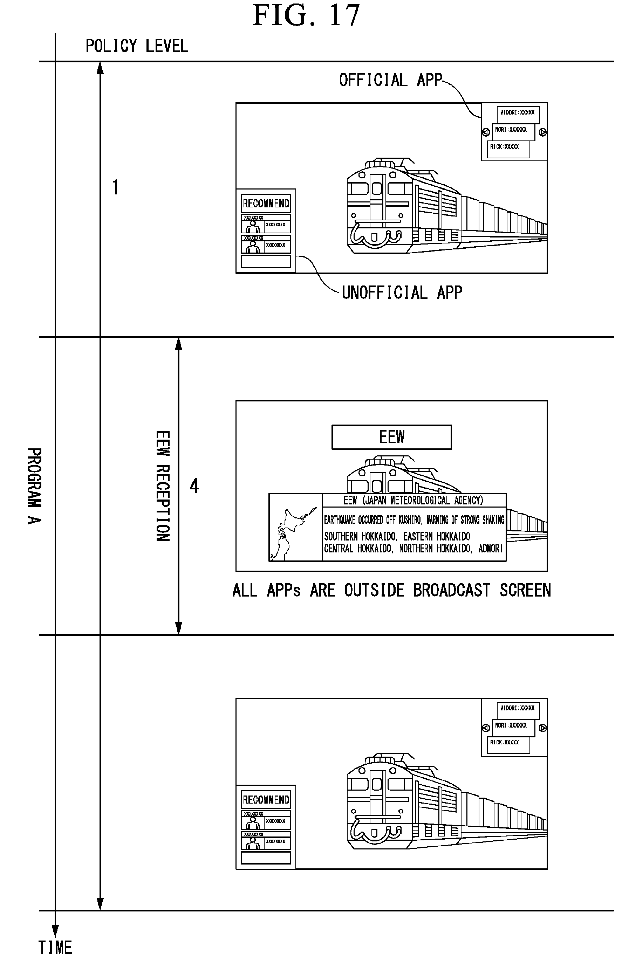

Fig. 17 illustrates an example of presentation control upon receiving an EEW. When a program policy level of a program A is "1," the application screen of the official application and the application screen of the unofficial application are also superimposed and displayed on the broadcast screen in a broadcast time band of the program A. However, the receiver determines that the policy level in the time band in which the EEW is generated among broadcast time bands of the program A is the policy level "4" of the EEW. Because of this, the receiver prohibits the superimposition of the application screen of the official application and the application screen of the unofficial application on the broadcast screen in a time band in which the EEW is generated even in the broadcast time band of the program A.

[Description of embodiment of present invention to which example of above-described broadcasting/communication cooperation system has been applied]

Next, the embodiment of the present invention illustrated in Fig. 1 will be described.

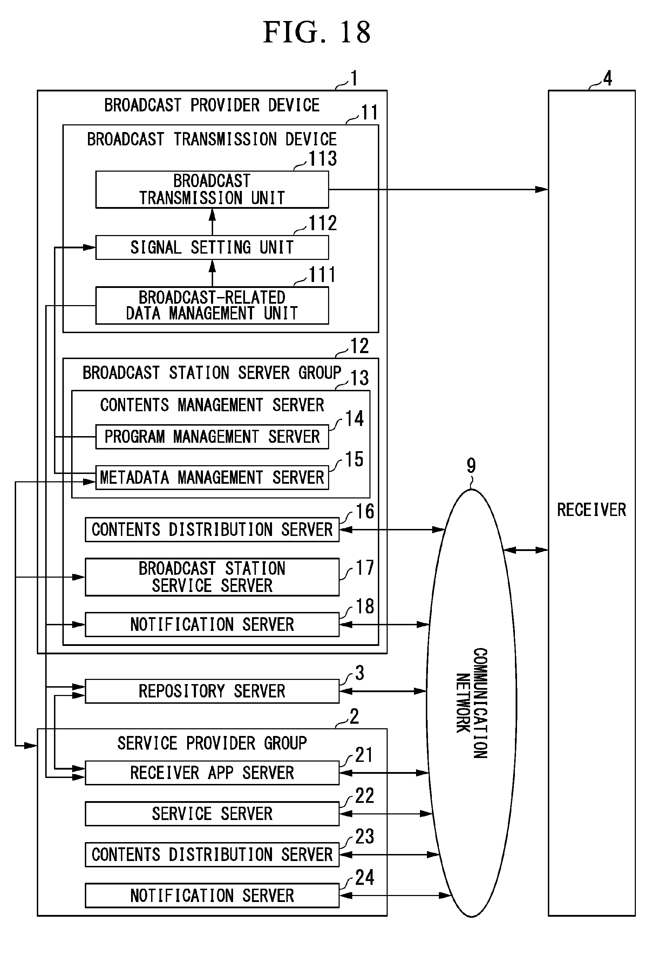

Fig. 18 is an overall configuration diagram of the broadcasting/communication cooperation system according to the embodiment of the present invention. As illustrated in Fig. 18, the broadcasting/communication cooperation system of this embodiment is configured to include a broadcast provider device 1 owned by the broadcast station, a service provider server group 2 owned by the service provider, a repository server 3 owned by the system manager, and a receiver 4 owned by a viewer. Although one receiver 4 is illustrated in Fig. 18, a plurality of receivers 4 are actually provided.

The broadcast provider device 1 includes a broadcast transmission device 11 and a broadcast station server group 12.

The broadcast transmission device 11 corresponds to a broadcast station facility illustrated in Fig. 3, and is a broadcast facility for digital broadcasting including a programming facility, a program transmission facility, a transmission facility, etc.

The broadcast transmission device 11 is configured to include a broadcast-related data management unit 111, a signal setting unit 112, and a broadcast transmission unit 113.

The broadcast-related data management unit 111 manages program security policy data of each program, application security policy data of an official application, other policy data, etc.

The program security policy data includes policy level data representing a policy level of the program, an application ID of an application bound with the program, a control code for the application bound with the program, etc.

The application security policy data includes information specifying a program bound with an application, protocol identification of the application, location information, etc. The location information represents a storage position (storage place) of the application, and, for example, is a uniform resource locator (URL) of a receiver app server 21 or a repository server 3 capable of downloading the application. The protocol identification indicates whether the application has been transmitted according to transmission or communication.

Only the official application is bound with the program.

The policy data includes presentation rule data and a policy level table.

The presentation rule data is data describing a presentation method of each policy level. The presentation method includes a screen display method and an audio output method. As the screen display method, for example, there are a method of displaying only a broadcast screen (program video), a method of superimposing application screens (application videos) of both an official application and an unofficial application on the broadcast screen or displaying the application screens outside the broadcast screen, a method of superimposing and displaying only the application screen of the official application on the broadcast screen and displaying the application screen of the unofficial application outside the broadcast screen, etc. As the audio output method, for example, there are a method of outputting only audio of a broadcast program, a method of independently outputting or mixing and outputting audio of the broadcast program and audio of the official application or the unofficial application, etc.

The policy level table is data describing a policy level corresponding to a genre of a program or a policy level of each event. The event, for example, is contents of a broadcast which is not necessarily generated in cooperation with the program such as an emergency warning signal or an EEW.

The signal setting unit 112 sets various data in a broadcast signal to be transmitted by the broadcast transmission unit 113.

The signal setting unit 112 sets the AIT and policy level data of a program in the broadcast signal based on program security policy data or application security policy data managed by the broadcast-related data management unit 111. The signal setting unit 112 sets whether to multiplex the AIT of the application bound with the program as an independent ES into a broadcast signal (broadcast TS) in a data carousel. Alternatively, the signal setting unit 112 sets information equivalent to the AIT of the application bound with the program in the EIT. In addition, the signal setting unit 112 sets policy level data of the program to the EIT (Table 5) or the AIT (Table 11). When the policy level corresponding to the genre of the program is used, the policy level data may not be set in a broadcast signal. In addition, the signal setting unit 112 sets the application file in a data carousel or the like. In addition, the signal setting unit 112 sets whether to set the policy data managed by the broadcast-related data management unit 111 in a broadcast signal in the form of a section in an engineering service or data carousel.

The broadcast transmission unit 113 transmits a broadcast signal of a digital broadcast. The broadcast signal includes information set by the signal setting unit 112.

The broadcast station server group 12 corresponds to the broadcast station server group illustrated in Fig. 3, and is configured to include a contents management server 13, a contents distribution server 16, a broadcast station service server 17, and a notification server 18.

The contents management server 13 is configured to include a program management server 14 and a metadata management server 15. The program management server 14 manages a previously broadcast program or a program to be broadcast. The metadata management server 15 manages metadata associated with each program. The metadata, for example, includes a program title, a program ID, a program outline, a performer, a broadcasting date, a script, subtitles, and explanatory data.

The contents distribution server 16 is connected to the receiver 4 via a communication network 9 such as the Internet, and distributes contents data of contents requested from the receiver 4.

The broadcast station service server 17 transmits contents data of a service of a broadcast station to the service provider server group 2. For example, there are a social network service, a blog service, etc. as the service of the broadcast station.

The notification server 18 is connected to the receiver 4 via the communication network 9, and distributes the AIT (Fig. 6) of the application bound with the program and policy level data of the program to the receiver 4 based on program security policy data and application security policy data acquired from the broadcast-related data management unit 111 of the broadcast transmission device 11. In addition, the notification server 18 distributes the policy data acquired from the broadcast-related data management unit 111 of the broadcast transmission device 11 to the receiver 4. Without distributing all or part of the information from the notification server 18, the broadcast transmission unit 113 of the broadcast transmission device 11 may transmit all or part of the information in only a broadcast signal.

The service provider server group 2 corresponds to the service provider server group illustrated in Fig. 3, and is configured to include a receiver app server 21, a service server 22, a contents distribution server 23, and a notification server 24. The receiver app server 21, the service server 22, the contents distribution server 23, and the notification server 24 are connected to the receiver 4 via the communication network 9.

The receiver app server 21 manages each application, and distributes an application file to the receiver 4.

The service server 22, for example, is a multilingual subtitle server, a speech speed conversion audio server, a social TV server, a recommendation server, a bookmark server, or the like, and distributes contents data of a service requested from the receiver 4.

The contents distribution server 23, for example, is a VOD distribution server, a subtitle distribution server, or a multi-view distribution server, and distributes contents data of contents requested from the receiver 4.

The notification server 24 transmits the AIT (Fig. 6) of the application to the receiver 4. In the case of the official application, the notification server 24 may transmit the AIT (Fig. 6) based on the program security policy data or application security policy data acquired from the broadcast-related data management unit 111 of the broadcast transmission device 11.

The repository server 3 corresponds to the repository illustrated in Fig. 3, and is connected to the receiver 4 via the communication network 9. The repository server 3 makes an electronic signature in an application file (application program) generated by the service provider, and distributes data necessary for authentication of the electronic signature of the application file (application program) to the receiver 4. In addition, the repository server 3 transmits data representing a list of official applications or location information of the official applications to the receiver 4. The repository server 3 may transmit the application file of the official application having the electronic signature to the receiver 4, and the receiver app server 21 may receive the application file of the official application having the electronic signature from the repository server 3 and transmit the application file to the receiver 4. In addition, the repository server 3 may transmit the AIT of the official application to the receiver 4.

In addition, the repository server 3 may transmit the AIT (Fig. 6) of the official application bound with the program to the receiver 4 based on the program security policy data or the application security policy data received from the broadcast-related data management unit 111 of the broadcast transmission device 11.

The receiver 4 corresponds to the receiver illustrated in Fig. 3, and, for example, is a device such as a TV receiver, a set-top box, a personal computer, or a portable terminal.

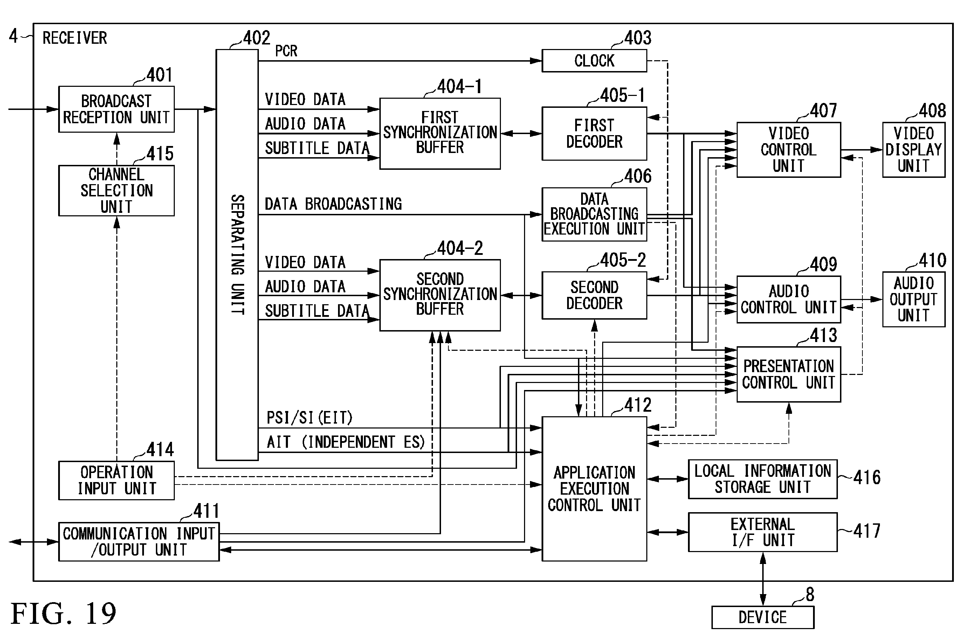

Fig. 19 is a functional block diagram illustrating an internal configuration of the receiver 4. As illustrated in Fig. 19, the receiver 4 is configured to include a broadcast reception unit 401, a separating unit 402, a clock 403, a first synchronization buffer 404-1, a second synchronization buffer 404-2. a first decoder 405-1, a second decoder 405-2, a data broadcasting execution unit 406, a video control unit 407, a video display unit 408, an audio control unit 409, an audio output unit 410, a communication input/output unit 411, an application execution control unit 412, a presentation control unit 413, an operation input unit 414, a channel selection unit 415, a local information storage unit 416, and an external I/F unit 417.

The broadcast reception unit 401 is a tuner which receives a broadcast signal. The broadcast signal is a wireless broadcast signal and/or a wired broadcast signal. The wireless broadcast signal is a signal obtained by receiving broadcast radio waves (terrestrial waves) transmitted by a transmitting antenna of a broadcast station side or satellite waves relayed by a satellite via a receiving antenna. The wired broadcast signal is a signal transmitted from the broadcast station side via an optical cable, a coaxial cable, or the like. The broadcast reception unit 401 receives and demodulates the broadcast signal and outputs a broadcast stream (TS).

The separating unit 402 is a demultiplexer, and separates the broadcast stream supplied from the broadcast reception unit 401 into various data such as a PCR, video data, audio data, subtitle data, a data broadcast, program specific information (PSI)/SI, and an AIT transmitted in an independent ES. The AIT may be included in the data broadcast or the same contents as the AIT may be set in the EIT constituting the SI. In addition, the separating unit 402 may separate the application file from the broadcast signal to output the separated application file.

The communication input/output unit 411 inputs/outputs data according to communication via the communication network 9. The communication input/output unit 411 outputs the AIT or the application file transmitted via the communication network 9 to the application execution control unit 412. In addition, the communication input/output unit 411 outputs policy level data or policy data of a program transmitted via the communication network 9 to the presentation control unit 413. In addition, the communication input/output unit 411 receives contents data distributed from the contents distribution server 16 or the contents distribution server 23 and contents data distributed from the service server 22 via the communication network 9 according to an instruction of an application executed by the application execution control unit 412, and outputs the received data to the second synchronization buffer 404-2.

The operation input unit 414 is an I/F which receives an operation by a viewer, and, for example, is a receiving device, which receives information input by the user from a remote controller, a portable telephone, a tablet terminal, etc., a keyboard, a mouse, or the like. The operation input unit 414 outputs a media (terrestrial/BS) or channel selection instruction input by the viewer to the channel selection unit 415. In addition, the operation input unit 414 outputs an instruction of a start or end of the broadcasting/communication cooperation service and an instruction for an application to the application execution control unit 412.

The channel selection unit 415 controls media or channels received in the broadcast reception unit 401 according to an operation input to the operation input unit 414.

The data broadcasting execution unit 406 executes a data broadcasting application transmitted in a digital broadcast signal, and outputs video (graphic) data of a data broadcast to the video control unit 407. The data broadcasting execution unit 406 includes an API for starting an application of the broadcasting/communication cooperation service. When the data broadcasting execution unit 406 executes a data broadcasting application and an API for starting the application of the broadcasting/communication cooperation service is called, the data broadcasting execution unit 406 instructs the application execution control unit 412 to start the application. In addition, the data broadcasting execution unit 406 acquires an AIT or application file transmitted by a data carousel from a data broadcast and outputs the acquired AIT or application file to the application execution control unit 412. In addition, the data broadcasting execution unit 406 acquires policy data transmitted by a data carousel from a data broadcast and outputs the acquired policy data to the presentation control unit 413.

The application execution control unit 412 executes an application of the broadcasting/communication cooperation service. According to the executed application, the application execution control unit 412 instructs the second decoder 405-2 to decode contents data received from the contents distribution server 16, the contents distribution server 23, or the service server 22. The contents data includes either video data or audio data or both thereof. The video data, for example, is a moving image, a still image, text data, etc. In addition, according to the executed application, the application execution control unit 412 outputs a graphic (video) data or video control instruction to the video control unit 407, and outputs an audio data or audio control instruction to the audio control unit 409.

The clock 403 outputs a timer counter value. The clock 403 adjusts a frequency of an oscillator according to a timer counter value indicated by the PCR, and synchronizes a time with the broadcast transmission side.

The first synchronization buffer 404-1 stores video data, audio data, and subtitle data output from the separating unit 402. A packetized elementary stream (PES) generated from an ES of the video data, the audio data, and the subtitle data is divided into transport packets constituting the broadcast stream (TS) and set. In a header of the PES, a presentation time stamp (PTS) is included. The first synchronization buffer 404-1 outputs the video data, the audio data, and the subtitle data output from the separating unit 402 in units of PES packets according to an instruction of the first decoder 405-1.

The second synchronization buffer 404-2 stores contents or contents data of a service received by the communication input/output unit 411. Alternatively, the second synchronization buffer 404-2 stores the video data, the audio data, and the subtitle data output from the separating unit 402 according to an instruction of the viewer input by the operation input unit 414. The second synchronization buffer 404-2 outputs the stored contents data or the video data, the audio data, and the subtitle data of the program in units of PES packets according to an instruction of the second decoder 405-2.

The first decoder 405-1 specifies a PES packet within the first synchronization buffer 404-1 in which the PTS corresponding to a time output from the clock 403 is set, reads video data, audio data, and subtitle data encoded from the specified PES packet, and decodes the read data to output the decoded data.

The second decoder 405-2 specifies a PES packet of contents data or a program within the second synchronization buffer 404-2 in which the PTS corresponding to a time output from the clock 403 is set, reads video data, audio data, and subtitle data encoded from the specified PES packet, and decodes the read data to output the decoded data.

The presentation control unit 413 determines a presentation method (a screen display method and an audio output method) according to a policy level of a program of a selected channel or a policy level of an event being generated and presentation rule data. The presentation control unit 413 instructs the video control unit 407 to display a broadcast screen, an application screen of an official application, and an application screen of an unofficial application according to the determined screen display method. Further, the presentation control unit 413 instructs the audio control unit 409 to output audio based on audio data of a broadcast, audio based on audio data of the official application, and audio based on audio data of the unofficial application according to the determined audio output method.

The video control unit 407 causes the video display unit 408 to display a broadcast screen based on video data and subtitle data of a program output from the first decoder 405-1 and application screens of the official application and the unofficial application based on video data of contents data output from the second decoder 405-2 according to a screen display method indicated from the presentation control unit 413 or the application execution control unit 412. In addition, when graphic (video) data has been output according to execution of an application from the application execution control unit 412, the video control unit 407 also causes the video display unit 408 to display a display screen based on the video data according to the screen display method indicated from the presentation control unit 413 or the application execution control unit 412. Also, video data and subtitle data of another program may be output from the second decoder 405-2.

The video display unit 408 is a general display, and displays broadcast and application screens. For example, the video display unit 408 displays a video obtained by combining a broadcast screen of a program with a moving image, a still image, or text of contents data received from the communication network 9, an application screen such as a graphic output from the application execution control unit 412 according to execution of the application, or a broadcast screen of another program.

The audio control unit 409 causes audio based on audio data of a program output from the first decoder 405-1, audio of the official application or the unofficial application based on audio data of contents data output from the second decoder 405-2, and audio based on audio data output from the application execution control unit 412 by executing the application to be output from the audio output unit 410 according to the audio output method indicated from the presentation control unit 413 or the application execution control unit 412. The audio data of the other program may be output from the second decoder 405-2. The audio output unit 410 is a general speaker, and outputs audio of a broadcast and an application.

The local information storage unit 416 stores various data such as user information.

An external interface unit (hereinafter referred to as an "external I/F unit") 417 transmits and receives data to and from a device 8 connected to a home network such as a local area network (LAN). The device 8 is a terminal that operates in cooperation with the receiver 4, and, for example, is a personal computer, a portable telephone, a tablet, a smartphone, or a personal digital assistant (PDA).

Also, when the receiver 4 is a set-top box or the like, the video display unit 408 and the audio output unit 410 serve as an external device connected to the receiver 4.

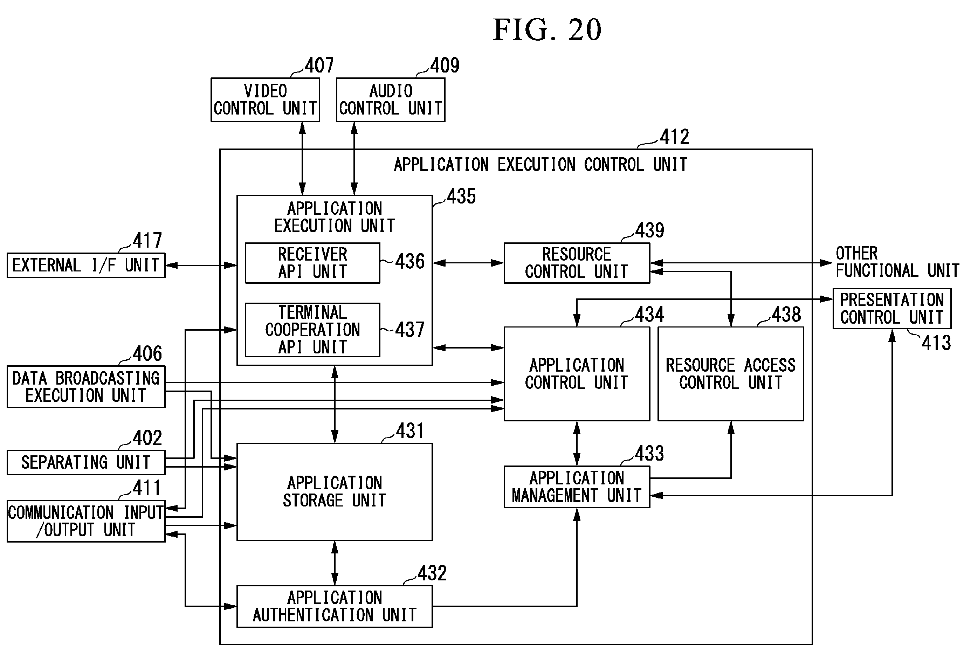

Fig. 20 is a block diagram illustrating a detailed configuration of the application execution control unit 412.

As illustrated in Fig. 20, the application execution control unit 412 includes an application storage unit 431, an application authentication unit 432, an application management unit 433, an application control unit 434, an application execution unit 435, a resource access control unit 438, and a resource control unit 439.

The application storage unit 431 stores an application file received by the communication input/output unit 411 via the communication network 9, an application file acquired by the data broadcasting execution unit 406 from a data broadcast, or an application file separated by the separating unit 402 from a broadcast signal. The application file may be pre-stored in the application storage unit 431 at a factory or the like. The application storage unit 431 includes a main storage device and an auxiliary storage device such as a disc, and, for example, the application file is stored on the disc and is read to the main storage device during execution. In this case, an application file of an application executed on the fly is stored only in the main storage device without being stored in the disc, and is deleted from the main storage device when the execution ends.

The application authentication unit 432 receives data necessary for authentication of an electronic signature from the repository server 3, and authenticates the electronic signature added to an application file (application program) using the received data. For example, the application authentication unit 432 decodes the application file having the electronic signature using a public key received from the repository server 3. When a predetermined data stream has been acquired as a result, the application authentication unit 432 determines that the authentication of the electronic signature has succeeded. The application authentication unit 432 determines that it is an official application when the authentication of the electronic signature has succeeded, and determines that it is an unofficial application when the authentication of the electronic signature has failed or when no electronic signature has been added.

The application management unit 433 manages a state of a start or stop of the application according to the application execution unit 435 and an output situation of a started application. The output situation is information about whether an image or audio has been output from an application in operation. The application management unit 433 receives a query from the presentation control unit 413, and returns an output situation of the started application and a response of whether the started application is an official application or an unofficial application.

The application control unit 434 controls the start or stop of the application in the application execution unit 435 and the like according to a control code for the application bound with the program or an instruction for the application input by the operation input unit 414. In addition, the application control unit 434 instructs the application execution unit 435 to start the application of which the start is indicated from the data broadcasting execution unit 406. When a channel is changed according to an input from the operation input unit 414, the application control unit 434 instructs the application execution unit 435 to end the application bound with a program of a channel before the change and start the application bound with a program of a channel after the change. Also, the application control unit 434 acquires the application bound with the program or the control code for the bound application from an AIT included in an independent ES of a broadcast signal or a data broadcast, information equivalent to an AIT acquired from an EIT of the broadcast signal, or an AIT received from the notification server 18 or 24 via the communication input/output unit 411. In addition, the application control unit 434 transmits a download request of an application file using location information set in the AIT as a destination. The repository server 3 or the receiver app server 21 receiving the download request from the receiver 4 distributes the application file to the receiver 4.

The application execution unit 435 includes a receiver API unit 436 and a terminal cooperation API unit 437. According to the instruction from the application control unit 434, the application execution unit 435 reads an application program of an application of a start instruction from the application storage unit 431 and executes the read application program. The application execution unit 435 executes the application program, so that the application operates on the receiver 4 and the application execution unit 435 requests the contents distribution server 16 or 23 to distribute contents via the communication network 9 or requests the service server 22 to provide a service. In addition, by executing the application program, the application execution unit 435 outputs a graphic data or video control instruction to the video control unit 407 or outputs an audio data or audio control instruction to the audio control unit 409.

The receiver API unit 436 executes a receiver API which is an API for using each resource within the receiver 4 when the application execution unit 435 executes the application. The receiver API unit 436 executes the receiver API, so that a resource within the receiver 4 from an application program executed by the application execution unit 435 is available.

The terminal cooperation API unit 437 executes a terminal cooperation API which is an API for enabling the device 8 on the home network communicable using the external I/F unit 417 or a device connected via the communication network 9 to use the function of the receiver 4. The terminal cooperation API unit 437 executes the terminal cooperation API, so that the resource within the receiver 4 from the device 8 connected via the home network or the device connected via the communication network 9 is available.

The resource control unit 439 controls access from the receiver API unit 436 or the terminal cooperation API unit 437 to each functional unit which is a resource within the receiver 4.

The resource access control unit 438 controls whether to permit the access from the receiver API unit 436 or the terminal cooperation API unit 437 to each functional unit within the receiver 4. The resource access control unit 438 performs this control according to whether an application that is a caller of each API executed by the receiver API unit 436 or the terminal cooperation API unit 437 is an official application or an unofficial application.

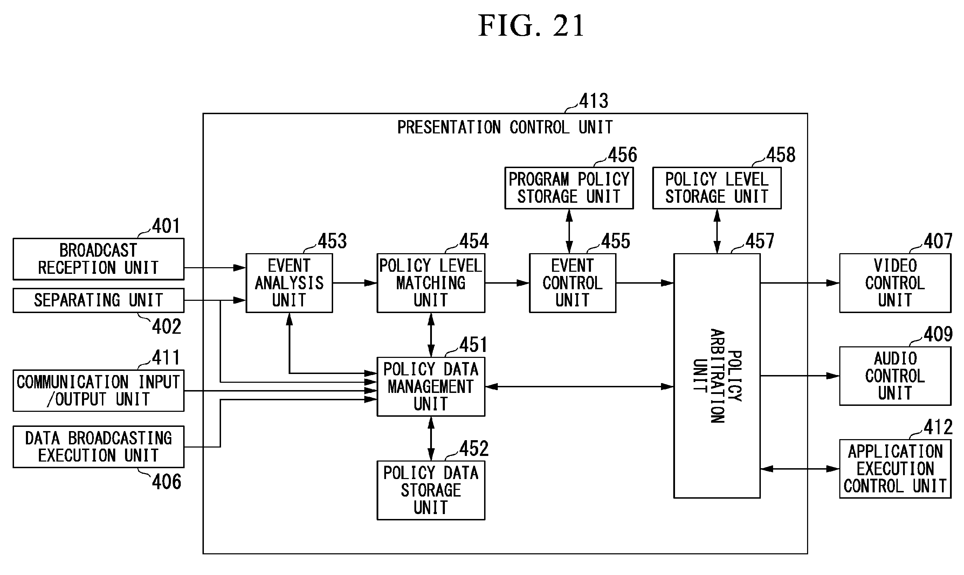

Fig. 21 is a block diagram illustrating a detailed configuration of the presentation control unit 413. As illustrated in Fig. 21, the presentation control unit 413 includes a policy data management unit 451, a policy data storage unit 452, an event analysis unit 453, a policy level matching unit 454, an event control unit 455, a program policy storage unit 456, a policy arbitration unit 457, and a policy level storage unit 458.

The policy data storage unit 452 stores policy data including presentation rule data and a policy level table. The policy data management unit 451 manages the policy data stored in the policy data storage unit 452. The policy data management unit 451 outputs the policy level table read from the policy data storage unit 452 to the policy level matching unit 454, and outputs presentation rule data read from the policy data storage unit 452 to the policy arbitration unit 457. In addition, the policy data management unit 451 receives policy data transmitted by broadcasting from the separating unit 402 or the data broadcasting execution unit 406, and receives policy data transmitted by communication from the communication input/output unit 411. The policy data management unit 451 updates policy data stored in the policy data storage unit 452 according to the policy data transmitted by the broadcasting or communication.

The event analysis unit 453 analyzes a broadcast signal received by the broadcast reception unit 401 or a data broadcast or subtitle data separated by the separating unit 402 and detects generation or an end of an event. When the generation or end of the event is detected (analyzed), the event analysis unit 453 outputs an event number of the detected event and status data representing the generation or end to the policy level matching unit 454.

The policy level matching unit 454 determines (matches) a policy level corresponding to a genre of each program indicated by the EIT and a policy level corresponding to an event specified by an event number by referring to a policy level table. The policy level matching unit 454 outputs data of a broadcast start time and a broadcast end time of a program acquired from the SI input from the separating unit 402 and a policy level (hereinafter referred to as a "program policy level") of the program to the event control unit 455. When the program policy level is set in the EIT, the policy level matching unit 454 outputs the data of the broadcast start time and the broadcast end time of the program and the program policy level of the program acquired from the EIT to the event control unit 455.

In addition, when the program policy level has been acquired from the AIT, the policy level matching unit 454 outputs the acquired program policy level to the policy arbitration unit 457. In addition, the policy level matching unit 454 outputs a policy level (hereinafter referred to as "trigger policy level") determined in correspondence with the event number to the policy arbitration unit 457.

The program policy storage unit 456 associates and stores the program policy level with the program start time and the program end time. The event control unit 455 associates the data of the program start time and the program end time input from the policy level matching unit 454 with the program policy level, writes the association result to the program policy storage unit 456, and manages a time at which display control is executed based on information stored in the program policy storage unit 456. The event control unit 455 refers to the data of the program start time stored in the program policy storage unit 456, and outputs the execution time and a program policy level corresponding to the execution time to the policy arbitration unit 457 when detecting the execution time and a time at which a notification of the execution time should be provided.

The policy level storage unit 458 stores the execution time and the program policy level input to the policy arbitration unit 457, the trigger policy level, and the status data. The policy arbitration unit 457 determines a policy level from the execution time and the program policy level input from the event control unit 455 and the trigger policy level input from the policy level matching unit 454. For example, the trigger policy level may be determined to be the policy level, and a higher level between the program policy level and the trigger policy level may be determined to be the policy level.

Also, when the program policy level acquired according to the AIT from the policy level matching unit 454 has been input, the policy arbitration unit 457 prioritizes the program policy level input from the policy level matching unit 454 above the program policy level input from the event control unit 455. That is, the policy arbitration unit 457 determines the policy level from the program policy level obtained from the AIT and the trigger policy level. The policy arbitration unit 457 refers to presentation rule data, and determines a screen display method and an audio output method (presentation method) from the determined policy level and information about whether an application in operation acquired from the application management unit 433 is official or an output situation. The policy arbitration unit 457 outputs the determined screen display method to the video control unit 407, and outputs the determined audio output method to the audio control unit 409.

Hereinafter, Fig. 1 will further be described.

In Fig. 1, the broadcast reception unit 401 receives a broadcast signal. Here, the broadcast signal received by the broadcast reception unit 401 includes various data such as an AIT or an extended EIT. As described above, the AIT is used as information indicating the start of the application executed by the receiver 4. In addition, the broadcast signal received by the broadcast reception unit 401 includes a policy in a predetermined packet.

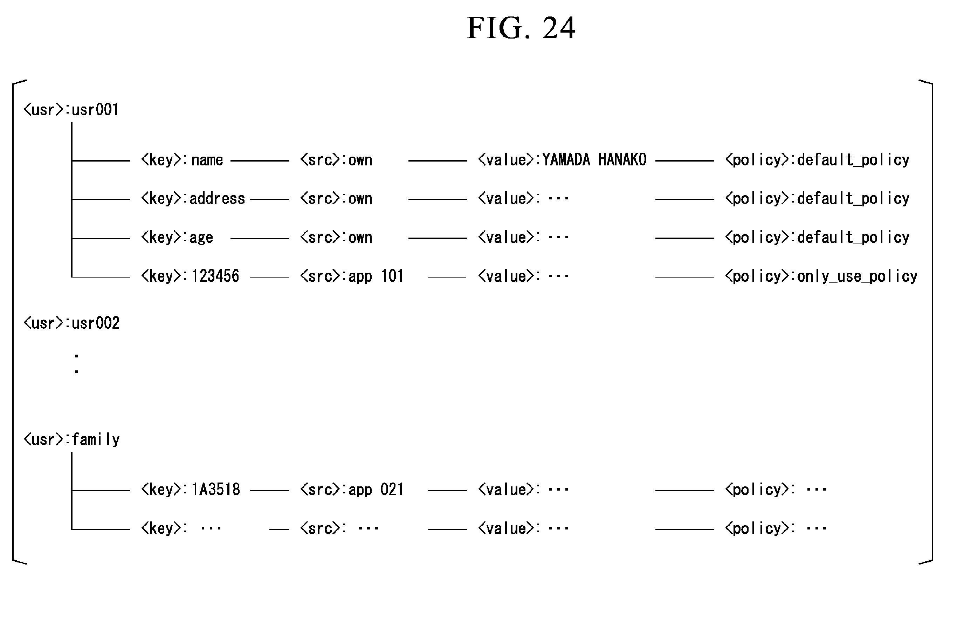

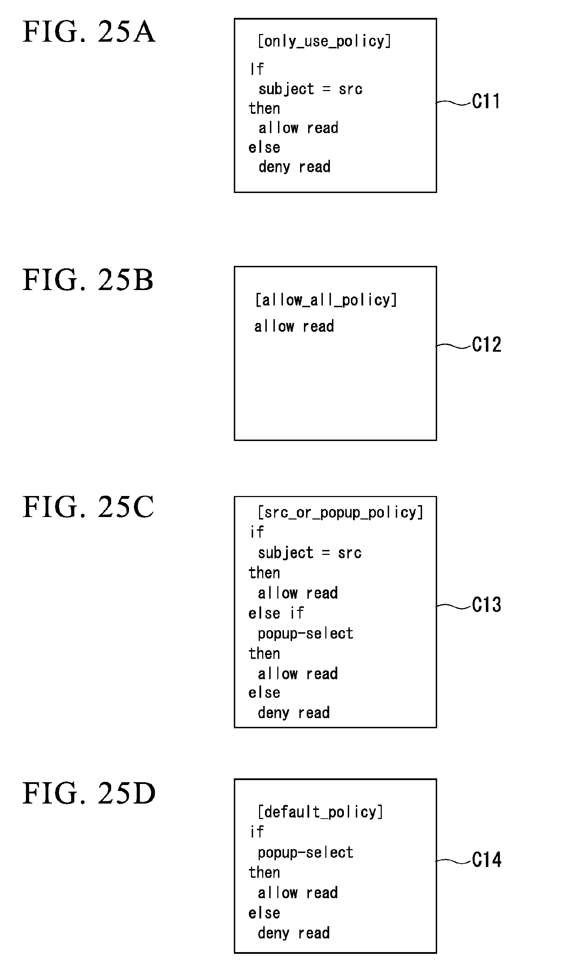

The "policy" referred to herein is data representing a determination criterion of whether access to target data is permitted as will be described later using Figs. 24 and 25A to 25D. The policy includes the determination criterion of whether the access is permitted, and is data for comparing the determination criterion to data input from the outside and determining whether access to the data is permitted according to the comparison result.

Various elements can be used as a predetermined packet to be transmitted by including the policy. For example, the policy may be included in a packet different from the AIT and EIT or may be included in an extended AIT or EIT by extending the AIT or EIT. In a policy transmission method, for example, a DMSS-CC data carousel is used.

The separating unit 402 separates various data from a broadcast signal received by the broadcast reception unit 401. In particular, the separating unit 402 separates the AIT and the extended EIT from the broadcast signal. Further, when the policy is included in a packet different from the AIT and the EIT, the separating unit 402 separates the packet including the policy from the broadcast signal.

The application control unit 434 controls the application execution unit 435 based on the AIT separated by the separating unit 402 and the start instruction from the communication input/output unit. In particular, the application control unit 434 outputs the application execution instruction to the application execution unit 435 based on the AIT.

The external I/F unit 417 communicates with a terminal device and acquires the user's input operation received by the terminal device. In particular, the external I/F unit 417 acquires user input data from the terminal device and outputs the user input data to the application execution unit 435. In addition, the external I/F unit 417 acquires user identification information by communicating with the terminal device.

The "user input data" referred to herein is data input by the user using the terminal device. For example, there are a user name, sex, age, etc. as the user input data. For example, the terminal device transmits the data input by the user to the external I/F unit 417 in response to a request from the application executed by the application execution unit 435.

In addition, the user identification information acquired by the external I/F unit 417 is information for identifying the user who performs a login operation on the receiver 4 using the terminal device. The user identification information is input by the user to the terminal device. Alternatively, terminal-device identification information and the user identification information are associated and pre-stored by the local information storage unit 412.

The application storage unit 431 stores various application programs. The application program, for example, is acquired based on information described in the AIT of the broadcast signal, and is pre-stored in the application storage unit 431.

The application execution unit 435 starts and executes the application by reading and executing an application program from the application storage unit 431 according to an application start command output from the application control unit 434.

Then, the application execution unit 435 outputs a request for saving data related to the user to the resource control unit 439 according to a process of an application to be executed.

The "user-related data" referred to herein is information related to each user of the receiver 4. There are the above-described user-input data and data generated by the application in association with the user as user-related data. As the data generated by the application in association with the user, for example, there are accuracy rate information generated by the application to be executed in synchronization with a quiz program in association with the user, information of points obtained by correctly answering the quiz, etc.

The application execution unit 435 associates requester information representing a requester requesting writing of terminal-related information, a policy, and key information, includes the association result in a request for saving user-related data, and outputs the request to the resource control unit 439.

When the user-related data is read, the "key information" referred to herein is information serving as a search key. As the key information, for example, information representing an item of an attribute of the user is used.

The information representing the item of the attribute of the user, for example, is item names such as "full name," "sex," and "age." In addition, for example, when the user-related data is data generated in association with the user, an independent item name may be used.

In addition, when an application has made a save request, the requester information is provider identification information of the application. On the other hand, when the terminal device receiving the user's input has made the save request, the requester information is a value "own" representing that the user is a requester.

In addition, the application execution unit 435 starts the application according to an application start command included in the broadcast signal, and executes the application using the data read by the resource control unit 439.

The application executed by the application execution unit 435, for example, performs a process for data obtained from the broadcast signal in relation to the broadcast signal received by the broadcast reception unit 401 or a process related to contents of a broadcast program. In the process related to the broadcast signal, there are a service to be executed by an application in relation to viewing of a broadcast program, a service to be executed by an application in relation to metadata included in the broadcast signal, and a service to be executed by an application in relation to contents of the broadcast program.

As the service to be executed by the application in relation to the viewing of the broadcast program, for example, there is an age limit for the viewing of the program. At the time of the viewing of the program having the age limit, the application to be executed by the application execution unit 435 determines whether the user can view the program based on age data of the user among target data.

In addition, as a service to be executed by an application in relation to metadata, for example, there is filtering of information to be transmitted in a data broadcast. When the receiver 4 receives the data broadcast and displays various information, the application to be executed by the application execution unit 435 selects information related to a region, for example, based on address information of the user among target data, and causes the video display unit 408 (Fig. 19) to display the selected information.

In addition, as the service to be executed by the application in relation to contents of the broadcast program, for example, there is credit card payment in TV shopping. When the user performs credit card payment online using the receiver 4 during viewing of the TV shopping, the application to be executed by the application execution unit 435 reads a credit card number among the target data, generates credit card payment request information including the read credit card number, and transmits the credit card payment request information to a credit card payment server device on a network via the communication input/output unit 411.

The login processing unit 461 performs the login and logout of the user according to the user's operation.

The "login" referred to herein is a process of writing user identification information among login user information stored by the local information storage unit 416. On the other hand, the "logout" is a process of deleting the user identification information from login user information stored by the local information storage unit 416. In addition, the "user identification information" referred to herein is information for uniquely identifying the user. In addition, the "login user information" is information in which login state information and user identification information are associated.

For example, the local information storage unit 416 associates and pre-stores user identification information and a password input by the user. Then, the login processing unit 461 performs user authentication by referring to the local information storage unit 416 when an operation input representing a login request is acquired from the terminal device along with the identification information and the password of the user. Then, the login processing unit 461 determines that authentication is established when the user identification information and the password acquired from the terminal device are consistent with those stored in the local information storage unit 416, and determines that the authentication is not established when the information is not consistent. Then, when it is determined that the authentication is established, the login processing unit 461 writes login user information including user identification information acquired from the terminal device in the local information storage unit 416. In addition, the login processing unit 461 deletes login user information including user identification information acquired from the terminal device from the local information storage unit 416 when an operation input representing a logout request is acquired from the terminal device along with the user identification information.

Alternatively, when each user owns the terminal device and terminal-device identification information for identifying the terminal device is allocated to each terminal device, the login processing unit 461 may perform login authentication using the terminal device identification information instead of the password. For example, when each user owns a portable telephone and uses the portable telephone as the terminal device, the local information storage unit 416 associates and pre-stores the user identification information and an international mobile subscriber identity (IMSI) of the portable telephone to be used by the user in the login operation. The user registers the user identification information using the portable telephone, so that the user identification information and the IMSI are associated and stored in the local information storage unit 416.

Then, the login processing unit 461 performs user authentication by referring to the local information storage unit 416 when an operation input representing a login request is acquired along with the IMSI of the portable telephone from the portable telephone. Then, the login processing unit 461 determines that the authentication is established when the IMSI acquired from the portable telephone is consistent with the IMSI stored in the local information storage unit 416, and determines that the authentication is not established when the IMSIs are not consistent. Then, when it is determined that the authentication is established, the login processing unit 461 reads user identification information associated with the IMSI acquired from the portable telephone from the local information storage unit 416, and writes the login user information including the user identification information in the local information storage unit. In addition, the login processing unit 461 reads the user identification information associated with the IMSI acquired from the portable telephone from the local information storage unit 416 when an operation input representing a logout request is acquired along with the IMSI of the portable telephone from the portable telephone, and deletes the login user information including the user identification information from the local information storage unit 416.

Also, a physical address of a communication I/F having a portable telephone may be configured to be used instead of the above-described IMSI.

By referring to the above-described login user information, the receiver 4 can specify user identification information representing the user in a login state. Thereby, as will be described later, the application to be executed by the application execution unit 435 may acquire data associated with the user in the login state among user-related data stored by the local information storage unit 416. Then, the application executed by the application execution unit 435 can provide an individual service to each user using the acquired user-related data.

In addition, the local information storage unit 416 stores user identification information representing the user in the login state as the above-described login user information in the receiver 4 using the terminal device. Also, it is only necessary for the terminal device to be a device which receives the login operation of the user and outputs the received login operation to the receiver 4. The receiver 4 and the terminal device may be integrated.

The use state determination unit 464 generates use state information based on the login user information, and outputs the generated use state information to the access control unit 462. The "use state information" referred to herein is information representing the user identification information corresponding to the user in the login state, and is user identification information when the number of users in the login state is 1 (when the number of pieces of user identification information obtained from the login user information is 1) by referring to the login user information or information (for example, a value "family") representing that the number of users in the login state is not 1 when the number of users in the login state is not 1 (0, 2 or more) (when there is no user identification information obtained from the login user information or when there are a plurality of pieces of user identification information).

Upon receiving a request for saving user-related data associated with the user identification information representing the user in the login state, the user-related data, key information, requester information, and a policy, the resource control unit 439 associates the user identification information, the user-related data, the key information, the requester information, and the policy and writes the related data and information to the local information storage unit 416.

In this case, the resource control unit 439 acquires the use state information from the use state determination unit 464, and writes according to the use state information. For example, when the use state information represents identification information of one user, the resource control unit 439 associates and writes the identification information of the user, information related to the user, key information, requester information, and a policy. On the other hand, when the use state information represents a value "family," the resource control unit 439 associates and writes the value "family," user-related data, key information, requester information, and a policy.

In addition, when the policy determination unit 463 to be described later has permitted access, the resource control unit 439 reads data corresponding to user state information output from the use state determination unit 464 from the local information storage unit 416. That is, when the user state information represents identification information of one user, data associated with the user identification information is read from the local information storage unit 416. In addition, when the user state information represents the value "family," the user-related data associated with "family" is read from the local information storage unit 416.

In addition, based on key information designated from the application execution unit 435, the resource control unit 439 reads user-related data corresponding to both the user state information output from the use state determination unit 464 and the key information, from the local information storage unit 416.

The local information storage unit 416 associates and stores identification information of a user, data related to the user, and a policy representing a determination criterion of whether to permit access to the data (as will be described later).

In addition, the local information storage unit 416 further associates and stores requester information with the user-related data and the policy representing the determination criterion of whether to permit access to the user-related data.

In addition, when identification information of one user is associated with a plurality of pieces of data related to the user, the local information storage unit 416 associates and stores the user-related data, a policy representing a determination criterion of whether to permit access to the user-related data, requester information, and key information. In particular, the local information storage unit 416 stores the user-related data in correspondence with the key information.

The access control unit 462 controls data access performed by the resource control unit 439. In particular, upon receiving a request for saving the user-related data, the access control unit 462 acquires use state information from the use state determination unit 464 and outputs the acquired use state information to the resource control unit 439. In addition, upon receiving a request for acquiring the user-related data, the access control unit 462 acquires the use state information from the use state determination unit 464 and outputs the acquired use state information to the policy determination unit 463.

The policy determination unit 463 reads a policy associated with user identification information indicated by the use state information generated by the use state determination unit 464 from the local information storage unit 416, and determines whether to permit access to data associated with the user identification information based on the read policy.

More specifically, based on the read policy, the policy determination unit 463 compares data write requester information associated with user-related data indicated by identification information included in a read request to identification information of an application outputting the read request, and determines to permit the access when the information is consistent.

In addition, the policy determination unit 463 determines whether to permit the access according to an operation input representing whether to permit access to the user-related data indicated by the identification information included in the read request based on the read policy.

The communication input/output unit 411 outputs an application start instruction to the application control unit 434. For example, the communication input/output unit 411 receives the application start instruction transmitted from a server device via the communication network 9 and outputs the received application start instruction to the application control unit 434.

Next, a structure of data stored by the local information storage unit 416 and an operation of the receiver 4 when the data is accessed will be described in an example of the present invention.

Fig. 22 is a data structure diagram illustrating a data structure of user-related information stored by the local information storage unit 416. In Fig. 22, a value of an item <usr> represents user identification information. The local information storage unit 416 stores the user-related information for each user by associating and storing the user-related information and the user identification information.

This represents the user identification information in the login state. The value "family" of the item <usr> represents a state in which it is difficult to specify the user in the login state. As described above, the state in which it is difficult to specify the user in the login state, for example, is a state in which there is no user in the login state and a state in which there are two or more users in the login state.

In addition, in the item <value>, data related to a user identified by a value of the item <usr> such as a user name, sex, or age is stored. Hereinafter, data stored in the item <value> is referred to as "target data." The application execution unit 435 provides a service using the target data.

In addition, in an item <key>, key information for specifying the target data is stored.

As illustrated in Fig. 22, the local information storage unit 416 stores the target data in association with the item <key> and further in association with the item <usr>. That is, the local information storage unit 416 stores the target data in association with user identification information.

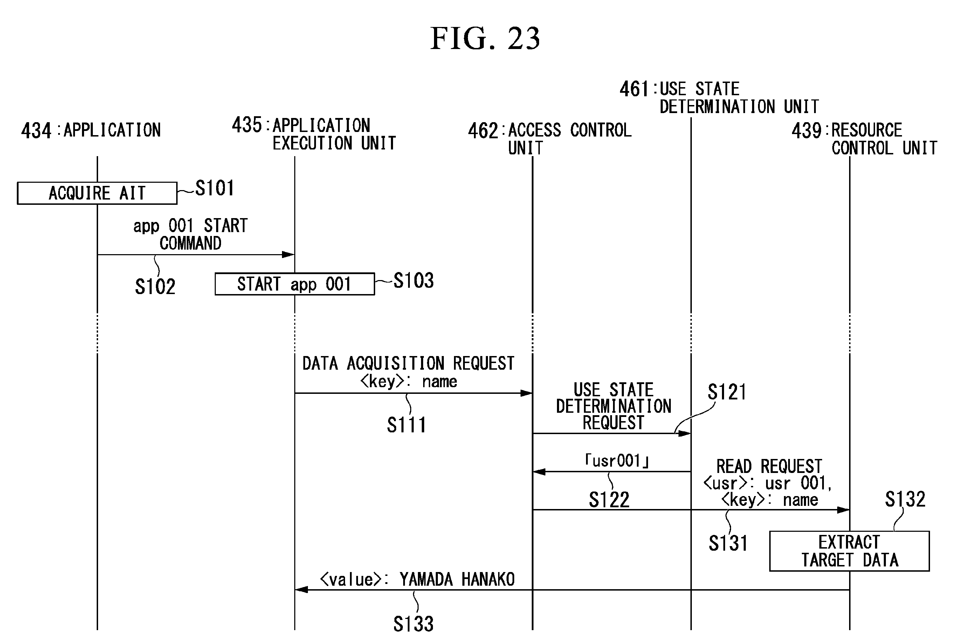

Fig. 23 is a sequence diagram illustrating an example of an operation of the receiver 4 when the application execution unit 435 acquires target data according to a process of an application to be executed thereby.

First, the application control unit 434 acquires the above-described AIT from the separating unit 402 or the communication input/output unit 411 (sequence S101), and outputs an application start command having a name of "app 001" to the application execution unit 435 according to the AIT (sequence S102). Then, the application execution unit 435 starts and executes app 001 according to the start command output from the application control unit 434 (sequence S103).

Thereafter, in association with the process in app 001, the application execution unit 435 outputs a data acquisition request to the access control unit 462 (sequence S111). This data acquisition request is a signal for requesting the target data, and includes an item <key> as information for specifying required target data. In the example of Fig. 23, the application execution unit 435 includes and outputs a value "name" of the item <key> in the data acquisition request. The value "name" of the item <key> is associated with the user name in the user-related information stored by the local information storage unit 416.

The access control unit 462 receiving the output of the data acquisition request first outputs a use state determination request to the use state determination unit 464 (sequence S121). The use state determination request is a request for asking about an identification number of a user in the login state. Then, the use state determination unit 464 outputs the use state information to the access control unit 462 according to the use state determination request (sequence S122).

The use state information is information representing the login state of the user. Here, the user of the receiver 4, for example, logs in at the initiation of use of the receiver 4 and logs out at the end of use of the receiver 4. The user can receive an individual service for each user by performing the login operation. When one user is in the login state, use state information includes user identification information representing the user. In addition, when there is no user in the login state or when there are two or more users in the login state, the use state information includes user identification information "family" representing an unspecified user.

Then, when the use state determination unit 464 receives an output of a use state determination request, the local information storage unit 416 reads login user information. When there is one piece of user identification information indicated by the login user information, the use state determination unit 464 outputs the identification information as the use state information. On the other hand, when there is no user identification information indicated by the login user information or when there are a plurality of pieces of user identification information indicated by the login user information, the use state determination unit 464 outputs use state information of which a value is "family." Like the value "family" of the above-described item <usr>, the value "family" of the use state information indicates a state in which it is difficult to specify a user in the login state.

In the example illustrated in Fig. 23, one user is in the login state, and the use state determination unit 464 outputs user identification information "usr 001" to the access control unit 462.

Next, the access control unit 462 outputs a read request to the resource control unit 439 (sequence S131). The read request is a signal for requesting the reading of target data, and includes a value of the item <usr> acquired from the use state determination unit 464 and a value of the item <key> as information for specifying the requested target data. Here, the access control unit 462 includes a value "usr 001" of the use state information as a value of the item <usr>, and outputs a read request including a value "name" of the item <key> included in the data acquisition request.

Then, the resource control unit 439 reads the value of the item <usr> and the value of the item <key> from the read request, and reads target data associated with these values from the local information storage unit 416 (sequence S132). Here, as illustrated in Fig. 22, the local information storage unit 416 stores target data "Yamada Hanako" in association with the value "usr 001" of the item <usr> and the value "name" of the item <key>. Then, the resource control unit 439 reads the target data "Yamada Hanako."

Then, the resource control unit 439 outputs the read target data to the application execution unit 435 (sequence S133).

According to the above, the application execution unit 435 acquires target data associated with identification information of a user communicable with the external I/F unit 417. Here, the use state determination unit 464 acquires user identification information representing the user in the login state and generates use state information, and therefore the user using the receiver 4 is identified. In addition, it is possible to control whether to access data related to an individual user or whether to access data common to users of the receiver 4 by determining whether a specific user occupies and uses the receiver 4. Accordingly, the application execution unit 435 can acquire data corresponding to the user using the receiver 4 and provide a service corresponding to the user using the receiver 4 using the data.

For example, when the application execution unit 435 has acquired a user name "Yamada Hanako," the display unit provided in the receiver 4 displays the user name, thereby causing the user to check whether the user himself/herself is in the login state. Here, there is a risk of erroneous registration in which the receiver 4 stores target data related to a user in the login state in association with the identification information of another user when the other user is in the login state. It is possible to prevent such erroneous registration by causing the user to check whether the user himself/herself is in the login state.

In addition, at the time of viewing of a program having an age limit, the application execution unit 435 can acquire age data of a user, and the application executed by the application execution unit 435 can determine whether the user can view the program based on the data.

In addition, when the receiver 4 displays the information, it is possible to filter information according to the user using the receiver 4. For example, when the application execution unit 435 causes the display screen provided in the receiver 4 to display an advertisement in a process of an executed application, the application execution unit 435 acquires age data or sex data of the user using the receiver 4 in a method described in Fig. 23. Then, the application execution unit 435 filters an advertisement acquired as a display candidate based on the age or sex of the user.

In this manner, the receiver 4 filters and provides information according to the user using the receiver 4, thereby more reliably providing beneficial information for the user.

Even when data stored by the local information storage unit 416 is updated, the application execution unit 435 includes and outputs the item <key> in a data acquisition request and the resource control unit 439 updates data by specifying target data based on the value of the item <key> included in the data acquisition request and use state information output by the use state determination unit 464 as described in Fig. 23.

In addition, when the target data is newly saved, the application execution unit 435 includes and outputs the target data and the item <key> in the data save request. Then, the resource control unit 439 reads a value of the item <key> included in the data save request and acquires the use state information output by the use state determination unit 464 via the access control unit 462. Then, the resource control unit 439 writes a value of the target data to the local information storage unit 416 in association with a value of the item <key> and the use state information serving as a value of the item <usr>.

According to an application requesting access to target data and a provider of the application, available data may be configured to be limited.

Fig. 24 is a data structure diagram illustrating another data structure of the user-related information stored by the local information storage unit 416. In the data structure illustrated in Fig. 24, an item <src> and an item <policy> are added in addition to the data structure described with reference to Fig. 22.

In the item <src>, data representing an access requester of the target data is stored. A value "own" of the item <src> indicates that the user has requested the storage of the target data. In addition, in the item <src>, identification information of an application requesting the storage of the target data, identification information of the provider of the application, etc. are stored.

In addition, in the item <policy>, a policy name is stored as a link for the policy.

For example, when the policy is included and transmitted in an AIT, the separating unit 402 separates the AIT from a broadcast signal to output the AIT to the application execution control unit 412 if the broadcast reception unit 401 receives a broadcast signal. Then, the application execution control unit 412 reads a policy from the AIT and writes the policy to the local information storage unit 416. The same is also true for the case in which the policy is included and transmitted in an extended EIT.

In addition, for example, when the policy determination unit 463 requests a policy and requester information by outputting user identification information "usr 001" and key information "123456," the resource control unit 439 reads a policy corresponding to a policy name "only_use_policy" associated with "usr 001" and "12345" and requester information "app 101" from the local information storage unit 416 and outputs the read policy and the requester information to the policy determination unit 463.

In addition, for example, when the application execution unit 435 requests the reading of data by outputting the key information "12345" and the identification information "app 101" of the application provider and the policy determination unit 463 permits the reading of data, the resource control unit 439 reads the target data "Yamada Hanako" corresponding to the key information "name" and user identification information "usr 001" output from the use state determination unit 464 from the local information storage unit 416 and outputs the read target data to the application execution unit 435.

Figs. 25A to 25D are data structure diagrams each illustrating a data structure of policy information stored by the local information storage unit 416. As illustrated in Figs. 25A to 25D, the local information storage unit 416 stores a policy in which a policy name is associated with a policy main body. The local information storage unit 416 stores default_ policy, only_use_policy, allow_all_policy, and src_or_popup_policy as the policy.

A code C11 illustrated in Fig. 25A is a code representing only_use_policy.

only_use_policy is a policy for enabling only an application provided by the same provider as that of the application requesting the registration of the target data to have access.

Also, only_use_policy may be configured to make a determination based on an application in place of a registrant of the application and enable only the same application as an application requesting the registration of target data to have access.

In the code C11, the policy name "only_use_policy" is associated with a code main body. In a variable "subject" of the code main body, identification information of a provider of an application which requests the acquisition of target data is stored. In addition, in a variable "src," identification information of a provider of an application requesting the storage of target data stored in the item <src> described with reference to Fig. 24 is stored.

The policy determination unit 463 determines that a condition "subject = src" has been satisfied when the identification information of the provider of the application requesting the acquisition of the target data is consistent with the identification information of the provider of the application requesting the storage of the target data in the execution of "only_use_policy." Then, the policy determination unit 463 executes a code "allow_read" for replying that access is permitted according to a "then" branch in a conditional statement "if...then...else..." Thereby, the policy determination unit 463 outputs a determination result indicating that the access is permitted to the access control unit 462.

On the other hand, when the identification information of the provider of the application requesting the acquisition of the target data is not consistent with the identification information of the provider of the application requesting the storage of the target data, the policy determination unit 463 determines that the condition "subject = src" is not satisfied. Then, the policy determination unit 463 executes a code "deny_read" for replying that access is denied according to an "else" branch in the conditional statement "if...then...else..." Thereby, the policy determination unit 463 outputs a determination result indicating that the access is denied to the access control unit 462.

A code C12 illustrated in Fig. 25B is a code representing allow_all_policy. allow_all_policy is a policy for permitting access for all access requesters.

In the code C12, a policy name "allow_all_policy" is associated with a code main body. According to the code "allow_read" of the code main body, the policy determination unit 463 outputs a determination result representing that the access is permitted to the access control unit 462.

A code C13 illustrated in Fig. 25C is a code representing src_or_popup_policy. src_or_popup_policy is a policy for first determining whether access is permitted according to an access requester and asking the user about whether to permit access to target data when it is determined that the access is permitted.

In the code C13, a policy name "src_or_popup_policy" is associated with the code main body. As in the case of the code C11, when the identification information of the provider of the application requesting the storage of the target data is consistent, a condition "subject = src" is satisfied, and the policy determination unit 463 outputs a determination result indicating that the access is permitted to the access control unit 462.

On the other hand, when the identification information of the provider of the application requesting the acquisition of the target data is not consistent with the identification information of the provider of the application requesting the storage of the target data, the policy determination unit 463 determines that the condition "subject = src" is not satisfied. Then, the policy determination unit 463 executes a code "popup-select" according to an "else if" branch in the conditional statement "if...then...else if..." The code "popup-select" is a code for acquiring the selection of the user by causing the terminal device to display a popup window for asking about whether to permit access to data.

When the selection of the user who permits the access to the data in the code "popup-select" is acquired, the policy determination unit 463 executes a code "allow_read" for replying that access is permitted according to a "then" branch in a conditional statement "else if...then...else..." Thereby, the policy determination unit 463 outputs a determination result representing that the access is permitted to the access control unit 462.

On the other hand, when the policy determination unit 463 acquires the selection of the user who denies the access to the data in the code "popup-select," the policy determination unit 463 executes a code "deny_read" for replying that access is denied according to an "else" branch in a conditional statement "else if...then...else..." Thereby, the policy determination unit 463 outputs a determination result representing that the access is denied to the access control unit 462.

A code C14 illustrated in Fig. 25D is a code representing default_policy. default_policy is a policy for asking the user about whether to permit access to the target data. In the case of default_policy, the policy determination unit 463 determines whether to permit the access according to selection of the user, for example, by causing the terminal device to display a popup screen for asking about permission/denial for the target data and acquiring the selection of the user received by the terminal device.

As described in the code C13, the code "popup-select" is a code for acquiring the selection of the user by causing the terminal device to display a popup window for asking about whether to permit access to data.

When the policy determination unit 463 acquires the selection of the user who permits the access to the data in the code "popup-select," the policy determination unit 463 executes a code "allow_read" for replying that access is permitted according to a "then" branch in a conditional statement "if...then...else..." Thereby, the policy determination unit 463 outputs a determination result representing that the access is permitted to the access control unit 462.

On the other hand, when the policy determination unit 463 acquires the selection of the user who denies the access to the data in the code "popup-select," the policy determination unit 463 executes a code "deny_read" for replying that access is denied according to an "else" branch in a conditional statement "if...then...else..." Thereby, the policy determination unit 463 outputs a determination result representing that the access is denied to the access control unit 462.

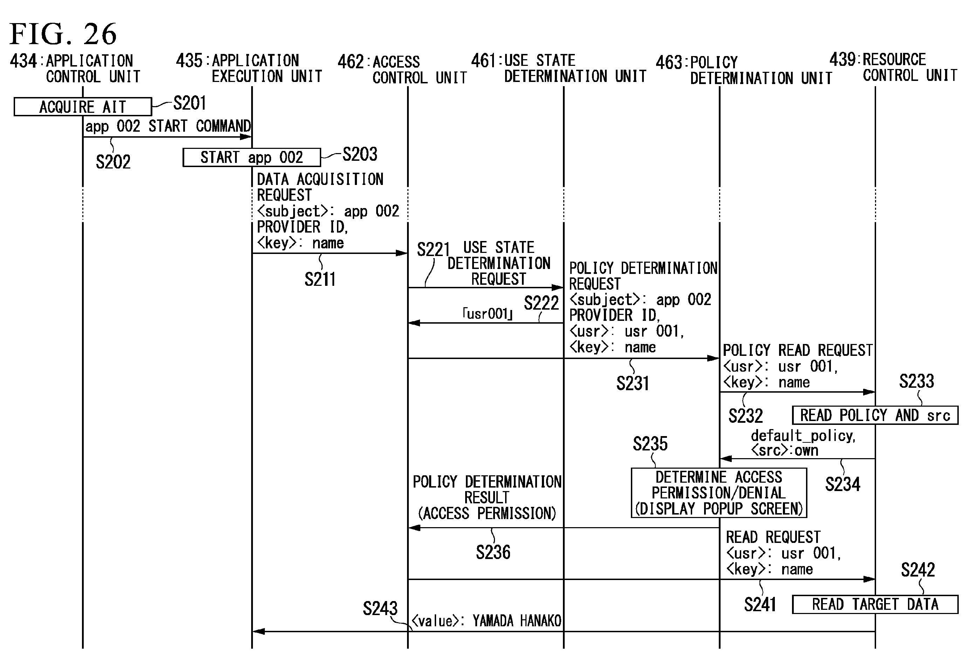

Fig. 26 is a sequence diagram illustrating a first example of the operation of the receiver 4 in the case in which the policy determination unit 463 makes a policy determination when the application execution unit 435 acquires target data according to a process of an application to be executed.

First, the application control unit 434 acquires the above-described AIT from the separating unit 402 or the communication input/output unit 411 (sequence S201), and outputs an application start command having a name of "app 002" to the application execution unit 435 according to the above-described AIT (sequence S202). Then, the application execution unit 435 starts and executes app 002 according to the start command output from the application control unit 434 (sequence S203).

Thereafter, in association with the process in app 002, the application execution unit 435 outputs a data acquisition request to the access control unit 462 (sequence S211). In this case, the data acquisition request includes an item <subject> in addition to the item <key> in the case of step S111 (Fig. 23) as information for specifying required target data. In the item <subject>, information representing an access requester is stored. This is because the access permission/denial is configured to be determined according to a data acquisition requestor in a policy determination.

In the example illustrated in Fig. 26, the application execution unit 435 stores identification information of a provider of app 0002 in the item <subject> of the data acquisition request, and stores and outputs a value "name" in the item <key>.

The access control unit 462 receiving the output of the data acquisition request first outputs a use state determination request to the use state determination unit 464 (sequence S221). Then, the use state determination unit 464 outputs the use state information to the access control unit 462 according to the use state determination request (sequence S222). In the example illustrated in Fig. 26, as in the case of step S122 (Fig. 23), the use state determination unit 464 outputs the user identification information "usr 001" to the access control unit 462.

Next, the access control unit 462 outputs a policy determination request to the policy determination unit 463 (sequence S231). The policy determination request is a signal for requesting the policy determination unit 463 to determine a policy, and includes an item <subject>, an item <usr>, and an item <key>.

The policy determination unit 463 receiving the output of the policy determination request reads the value of the item <usr> and the value of the item <key> from the policy determination request, and outputs the policy read request including the values to the resource control unit 439 (sequence S232). The policy read request is a signal for requesting the reading of the policy stored by the local information storage unit 416 and the value of the item <src> for use in the policy determination, and includes the item <usr> and the item <key> as information for specifying the policy.

Then, the resource control unit 439 reads the value of the item <usr> and the value of the item <key> from the policy read request, and reads a value of the item <src> and a policy name associated with these values from the local information storage unit 416. Further, the resource control unit 439 reads a policy associated with the read policy name from the local information storage unit 416 (sequence S233) and outputs the read policy and the value of the item <src> to the policy determination unit 463 (sequence S234). In the example illustrated in Fig. 26, the resource control unit 439 outputs default_policy and the value "own" of the item <src> to the policy determination unit 463.

Next, the policy determination unit 463 determines whether to permit access according to a policy output from the resource control unit 439 (sequence S235). Here, the policy determination unit 463 causes the terminal device to display a query popup screen according to default_policy and determines that access is permitted according to a selection operation received by the terminal device. Then, the policy determination unit 463 outputs a determination result to the access control unit 462 (sequence S236).

Hereinafter, sequences S241 to S243 are similar to sequences S131 to S133 of Fig. 23. Also, when the policy determination unit 463 determines that the access is denied, the access control unit 462 outputs an error code to the application execution unit 435 without acquiring target data.

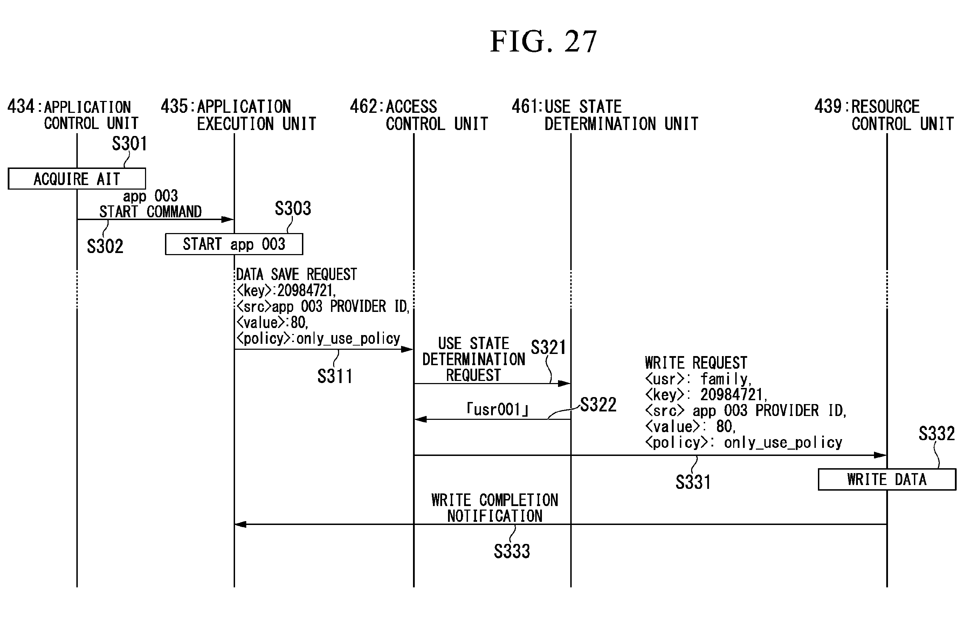

Fig. 27 is a sequence diagram illustrating an example of the operation of the receiver 4 in the case in which the policy determination unit 463 makes a policy determination when the application execution unit 435 writes target data according to a process of an application to be executed thereby.

First, the application control unit 434 acquires the above-described AIT from the separating unit 402 or the communication input/output unit 411 (sequence S301), and outputs an application start command having a name of app 003 to the application execution unit 435 according to the above-described AIT (sequence S302). Then, the application execution unit 435 starts and executes app 003 according to the start command output from the application control unit 434 (sequence S303).

Thereafter, in association with the process in app 003, the application execution unit 435 outputs a data save request to the access control unit 462 (sequence S311). This data save request is a signal for requesting the saving of the target data, and includes the target data and items <key>, <src>, and <policy> to be saved in association with the target data.

The access control unit 462 receiving the output of the data save request first outputs a use state determination request to the use state determination unit 464 (sequence S321). Then, the use state determination unit 464 outputs the use state information to the access control unit 462 according to the use state determination request (sequence S322). In the example illustrated in Fig. 27, the use state determination unit 464 outputs a value "family" representing a state in which it is difficult to specify a user using the receiver 4 to the access control unit 462.

Next, the access control unit 462 outputs a write request to the resource control unit 439 (sequence S331). The write request is a signal for requesting writing of target data, and includes a value "family" acquired from the use state determination unit 464 as a value of the item <usr> in addition to the target data and the items <key>, <src>, and <policy> saved in association with the target data included in the data save request.

The resource control unit 439 receiving the output of the write request writes the target data included in the write request to the local information storage unit 416 in association with each item (sequence S332).

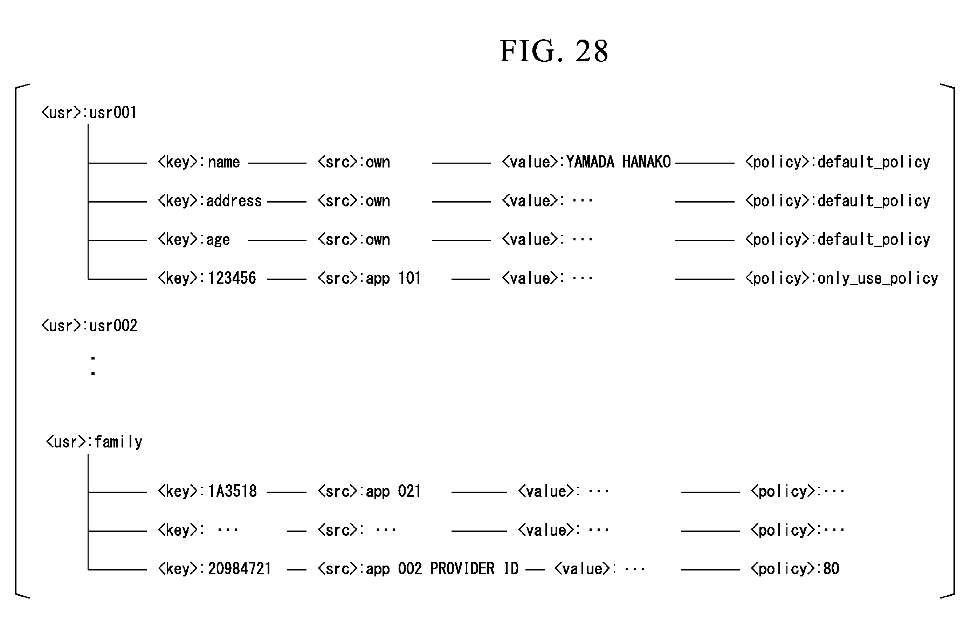

Fig. 28 is a diagram illustrating an example of user-related information stored by the local information storage unit 416 after the resource control unit 439 has written data in sequence S332. As illustrated in Fig. 28, the local information storage unit 416 stores the target data included in the write request in association with the items <usr>, <key>, <src>, and <policy>.

When the writing of the data is completed, the resource control unit 439 outputs a write completion notification representing that writing has succeeded to the application execution unit 435 (sequence S333).

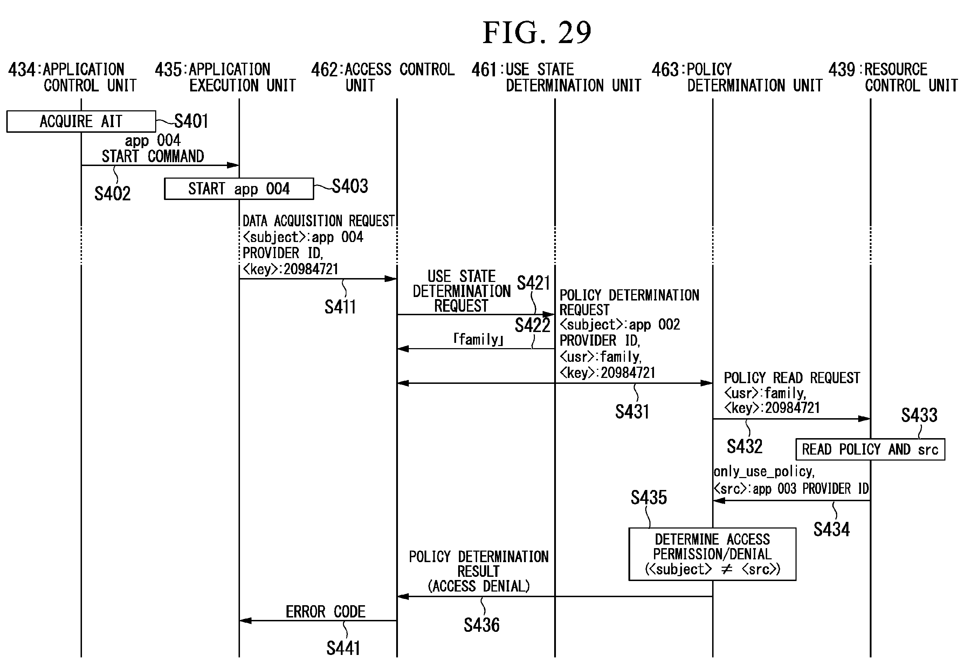

Fig. 29 is a sequence diagram illustrating a second example of the operation of the receiver 4 in the case in which the policy determination unit 463 makes a policy determination when the application execution unit 435 acquires target data according to a process of an application to be executed thereby.

First, the application control unit 434 acquires the above-described AIT from the separating unit 402 or the communication input/output unit 411 (sequence S401), and outputs an application start command having a name of app 004 to the application execution unit 435 according to the above-described AIT (sequence S402). Then, the application execution unit 435 starts and executes app 004 according to the start command output from the application control unit 434 (sequence S403).

Thereafter, in association with the process in app 002, the application execution unit 435 outputs a data acquisition request to the access control unit 462 (sequence S411). In the example of Fig. 29, the application execution unit 435 stores identification information of a provider of app 0004 in the item <subject> of the data acquisition request, and stores and outputs a value "20984721 " in the item <key>.

The access control unit 462 receiving the output of the data acquisition request first outputs a use state determination request to the use state determination unit 464 (sequence S421). Then, the use state determination unit 464 outputs the use state information to the access control unit 462 according to the use state determination request (sequence S422). In the example illustrated in Fig. 29, as in the case of step S322 (Fig. 27), the use state determination unit 464 outputs the user identification information "family" to the access control unit 462.

Next, the access control unit 462 outputs a policy determination request to the policy determination unit 463 (sequence S431). The policy determination unit 463 receiving the output of the policy determination request reads the value of the item <usr> and the value of the item <key> from the policy determination request, and outputs the policy read request including the values to the resource control unit 439 (sequence S432).

Then, the resource control unit 439 reads the value of the item <usr> and the value of the item <key> from the policy read request, and reads a value of the item <src> and a policy name associated with these values from the local information storage unit 416. Further, the resource control unit 439 reads a policy associated with the read policy name from the local information storage unit 416 (sequence S433), and outputs the read policy and the value of the item <src> to the policy determination unit 463 (sequence S434). In the example illustrated in Fig. 29, the resource control unit 439 outputs ony_use_policy and the value "family" of the item <src> to the policy determination unit 463.

Next, the policy determination unit 463 determines whether to permit access according to a policy output from the resource control unit 439 (sequence S435). Here, the policy determination unit 463 compares the value of the item <subject> included in the policy determination request to the value of the item <src> output from the resource control unit 439 according to ony_use_policy, and determines that the access is denied because the two are different. Then, the policy determination unit 463 outputs a determination result to the access control unit 462 (sequence S436).

The access control unit 462 receiving the output of the determination result of the access denial outputs an error code representing that the access has been denied to the application execution unit 435 based on a policy (sequence S441).

In this manner, the resource control unit 439 reads target data only when the policy determination unit 463 makes a policy determination and the access permission is determined, so that it is possible to limit access requesters capable of accessing the target data and protect privacy of the user.

For example, the local information storage unit 4 stores a credit card number. Then, if the user performs credit payment when TV shopping is broadcast, only an application permitted by the user can acquire the credit card number, so that it is possible to save time and effort of the user inputting the credit card number while preventing improper acquisition of the credit card number.

As described above, the application execution unit 435 acquires target data associated with identification information of a user communicable with the external I/F unit 417, thereby acquiring data corresponding to the user using the receiver 4. Thereby, the receiver 4 can provide an individual service to each user using the receiver 4 using the data.

In addition, the resource control unit 439 reads target data only when the policy determination unit 463 makes a policy determination and the access permission is determined, so that it is possible to protect privacy of the user by managing access to data related to the user using the receiver.

In addition, the local information storage unit 416 stores target data and a policy further in association with application identification information, and the policy determination unit 463 permits access when identification information is consistent by comparing identification information of an application associated with target data to identification information of an application outputting a read request based on the read policy.

Alternatively, the local information storage unit 416 stores target data and a policy further in association with identification information of a provider of an application, and the policy determination unit 463 permits access when identification information is consistent by comparing identification information of the provider of the application associated with the target data to identification information of the provider of the application outputting a read request based on a read policy.

Thereby, the receiver 4 can protect privacy of the user by determining whether to permit access to user-related data for each application or each provider which provides the application.

In addition, the policy determination unit 463 determines whether to permit access according to an operation input representing whether to permit access to target data. Thereby, at the time of a determination of whether to permit the access, it is possible to directly reflect the intention of the user.

In addition, the local information storage unit 416 stores data in correspondence with key information, and the resource control unit 439 reads target data associated with both identification information and key information of a user based on the key information designated from the application execution unit 435. Thereby, the resource control unit 439 can read desired target data from a plurality of pieces of target data stored by the local information storage unit 416 in association with the identification information of one user.

The application execution control unit 412 and the presentation control unit 413 of the above-described receiver 4 internally have a computer system. Processes of operations of the application execution control unit 412 and the presentation control unit 413 of the receiver 4 are stored in a computer-readable recording medium in the form of a program. The computer system reads and executes this program and therefore the above-described processes are performed. The computer system used herein includes a central processing unit (CPU), various memories, an operating system (OS), and hardware such as peripheral devices.

In addition, the "computer-readable recording medium" is a storage device having a non-temporary storage function. For example, although the computer-readable recording medium may be a magnetic disk, a magneto-optical disc, a compact disc read-only memory (CD-ROM), a digital versatile disc-read only memory (DVD-ROM), a semiconductor disk (solid-state disk (SSD)), a semiconductor memory, or the like, the present invention is not necessarily limited thereto.

In addition, although the "recording medium" includes a volatile medium such as a dynamic random access memory (DRAM) or a static random access memory (SRAM) like a volatile memory inside the computer system serving as a server or client, the present invention is not necessarily limited thereto.

Further, although the "recording medium" includes a medium which holds a program for a short time such as a receiving/transmitting device or a transfer device when the program is transmitted via a network such as the Internet or a communication line such as a telephone line, the present invention is not necessarily limited thereto.

In addition, the computer program may be distributed through a broadcast or communication line, and the computer receiving the distribution may execute the program. The program may be a program for implementing some of the above-described processes. Alternatively, the program may be a program capable of implementing the above-described processes in combination with a program previously recorded on the computer system.

[Industrial Applicability]

The present invention can be applied to a receiver, a program, a receiving method, etc. capable of managing access to data related to users using the receiver while providing an individual service to each user.

[Reference Symbols]

| | |
|---|---|
| 1: | Broadcast provider device |
| 11: | Broadcast transmission device |
| 111: | Broadcast-related data management unit |
| 112: | Signal setting unit |
| 113: | Broadcast transmission unit |
| 12: | Broadcast station server group |
| 13: | Contents management server |
| 14: | Program management server |
| 15: | Metadata management server |
| 16: | Contents distribution server |
| 17: | Broadcast station service server |
| 18: | Notification server |
| 2: | Service provider server group |
| 21: | Receiver app server |
| 22: | Service server |
| 23: | Contents distribution server |
| 24: | Notification server |
| 3: | Repository Server |
| 4: | Receiver |
| 401: | Broadcast reception unit |
| 402: | Separating unit |
| 403: | Clock |
| 404-1: | First synchronization buffer |
| 404-2: | Second synchronization buffer |
| 405-1: | First decoder |
| 405-2: | Second decoder |
| 406: | Data broadcasting execution unit |
| 407: | Video control unit |
| 408: | Video display unit |

409:    Audio control unit
410:    Audio output unit
411:    Communication input/output unit
412:    Application execution control unit
413:    Presentation control unit
414:    Operation input unit
415:    Channel selection unit
416:    Local information storage unit
417:    External I/F unit
431:    Application storage unit
432:    Application authentication unit
433:    Application management unit
434:    Application control unit
435:    Application execution unit
436:    Receiver API unit
437:    Terminal cooperation API unit
438:    Resource access control unit
439:    Resource control unit
451:    Policy data management unit
452:    Policy data storage unit
453:    Event analysis unit
454:    Policy level matching unit
455:    Event control unit
456:    Program policy storage unit
457:    Policy arbitration unit
458:    Policy level storage unit
461:    Login processing unit
462:    Access control unit
463:    Policy determination unit
464:    Use state determination unit
9:      Communication network

**Claims**

1.  A receiver comprising:

    a broadcast reception unit configured to receive a broadcast signal;
    a related data storage unit which associates and stores identification information of a user, data related to the user, and a policy representing a determination criterion of whether or not to permit access to the data;
    a communication unit configured to acquire the user identification information by communicating with a terminal device;
    a policy determination unit configured to read the policy associated with the user identification information from the related data storage unit based on the user identification information acquired by the communication unit, and determine whether or not to permit the access to the data corresponding to the user identification information based on the read policy;
    a data reading unit configured to read the data corresponding to the user identification information from the related data storage unit in case that the access has been permitted; and
    an application execution unit configured to start an application according to an application start command included in the broadcast signal and execute the application using the data read by the data reading unit.

2.  The receiver according to claim 1,
    wherein the related data storage unit associates and stores the user-related data and the policy representing a determination criterion of whether or not to permit the access to the user-related data further in association with identification information of the application, and
    wherein the policy determination unit is configured to compare the application identification information associated with the user-related data indicated by the identification information to identification information of an application for which the read request has been output based on the read policy, and permit the access in case that the identification information is consistent.

3. The receiver according to claim 1, wherein the policy determination unit is configured to determine whether or not to permit the access according to an operation input indicating whether or not to permit the access to the user-related data indicated by the identification information based on the read policy.

4. The receiver according to claim 1,
   wherein the related data storage unit stores data in correspondence with the key information, and
   wherein the data reading unit is configured to read the data corresponding to both the user identification information and the key information based on key information designated from the application execution unit.

5. A program for causing a computer for use in a receiver, the program executing:

   receiving, by a broadcast reception unit, a broadcast signal;
   associating and storing, by a related data storage unit, identification information of a user, data related to the user, and a policy representing a determination criterion of whether or not to permit access to the data;
   acquiring, by a communication unit, the user identification information by communicating with a terminal device;
   reading, by a policy determination unit, the policy associated with the user identification information from the related data storage unit based on the user identification information acquired by the communication unit, and determining whether or not to permit the access to the data corresponding to the user identification information based on the read policy;
   reading, by a data reading unit, the data corresponding to the user identification information from the related data storage unit in case that the access has been permitted; and
   starting, by an application execution unit, an application according to an application start command included in the broadcast signal, and executing the application using the data read by the data reading unit.

6. A receiving method comprising:

   receiving a broadcast signal;
   associating and storing identification information of a user, data related to the user, and a policy representing a determination criterion of whether or not to permit access to the data;
   acquiring the user identification information by communicating with a terminal device;
   reading the policy associated with the user identification information based on the acquired user identification information, and determining whether or not to permit the access to the data corresponding to the user identification information based on the read policy;
   reading the data corresponding to the user identification information in case that the access has been permitted; and
   starting an application according to an application start command included in the broadcast signal, and executing the application using the read data.

# FIG. 1

RECEIVER — 4

APPLICATION EXECUTION CONTROL UNIT — 412

417 — EXTERNAL I/F UNIT

435 — APPLICATION EXECUTION UNIT

461 — LOGIN PROCESSING UNIT

439 — RESOURCE CONTROL UNIT

462 — ACCESS CONTROL UNIT

463 — POLICY DETERMINATION UNIT

464 — USE STATE DETERMINATION UNIT

416 — LOCAL INFORMATION STORAGE UNIT

401 — BROADCAST RECEPTION UNIT

402 — SEPARATING UNIT

411 — COMMUNICATION INPUT/OUTPUT UNIT

431 — APPLICATION STORAGE UNIT

434 — APPLICATION CONTROL UNIT

EP 2 712 188 A1

# FIG. 2

BROADCAST STATION

PROVISION OF SERVICE

SYSTEM MANAGER

AUTHENTICATION OF APP

VIEWER

PROVISION OF METADATA

REGISTRATION/APPROVAL OF APP

PROVISION OF SERVICE

PROVISION OF RECEIVER

SERVICE PROVIDER

RECEIVER MANUFACTURER

EP 2 712 188 A1

# FIG. 3

BROADCAST CONTENTS/BROADCASTING/
COMMUNICATION COOPERATION
DATA FORMAT

APPROVAL

REPOSITORY

AUTHENTICATION

BROADCAST STATION
DEVICE

**BROADCAST STATION SERVER GROUP**

| CONTENTS MANAGEMENT SERVER | A P I |
|---|---|
| VIEWER MANAGEMENT SERVER | |
| CONTENTS DISTRIBUTION SERVER | |
| BROADCAST STATION SERVICE SERVER | |

SECURITY

DB

USER CONTENTS-RELATED DATA

**SERVICE PROVIDER SERVER GROUP**

| RECEIVER APP SERVER | |
|---|---|
| SERVICE SERVER | A P I |
| CONTENTS DISTRIBUTION SERVER | |

DL

DB

USER CONTENTS SERVICE DATA

**RECEIVER**

APP

API

BROADCASTING/
COMMUNICATION
COOPERATION FUNCTION

·APP CONTROL
·DRAWING CONTROL
·SYNCHRONIZATION
·SECURITY

BASIC FUNCTION

CONTENTS
TRANSPORT
FORMAT

# FIG. 4

APPLICATION OF BROADCASTING/
COMMUNICATION COOPERATION SERVICE

RECEIVER API

OTHER DEVICE APP

OTHER DEVICE APP,
SERVER

REMOTE CONTROL, RECEIVER
INFORMATION ACQUISITION, ETC.

HOME NETWORK (LAN)

REMOTE CONTROL, COOPERATION,
NOTIFICATION (PUSH NOTIFICATION), ETC.

INTERNET

TERMINAL
COOPERATION API

TERMINAL
COOPERATION
API PROVIDING
PROCESS
(DAEMON)

RECEIVER RESOURCE
BROADCAST RESOURCE
(SI INFORMATION AND SYNCHRONIZATION),
REPRODUCTION CONTROL,
USER INFORMATION,
AUTHENTICATION, ETC.

RECEIVER FUNCTION

# FIG. 5

STREAM-DEPENDENT SERVICE

·AV STREAM
(VIDEO/AUDIO + SUBTITLES
+ DATA BROADCAST)

+

·BROADCASTING/COMMUNICATION
COOPERATION SERVICE
APPLICATION(COOPERATION)

INDEPENDENT SERVICE

·BROADCASTING/COMMUNICATION
COOPERATION SERVICE
APPLICATION(NON-COOPERATION)

# FIG. 6

```xml
<?xml version="1.0" encoding="utf-8"?>
<mhp:ServiceDiscovery xmlns:mhp="urn:dvb:mhp:2009"
               xmlns:ipi="urn:dvb:metadata:iptv:sdns:1008-1"
               xmlns:mpeg7="urn:tva:mpeg7:2005"
               xmlns:xsi="http://www.w3.org/2001/XMLSchema-instance">
  <mhp:ApplicationDiscovery>
    <mhp:ApplicationList>
      <mhp:Application>
        <mhp:appName ipi:Language="eng">SyncPlayerSample</mhp:appName>
        <mhp:applicationIdentifier>
          <mhp:orgId>100</mhp:orgId>
          <mhp:appId>200</mhp:appId>
        </mhp:applicationIdentifier>
        <mhp:applicationDescriptor>
          <mhp:controlCode mhp:type="ARIB-J">AUTOSTART</mhp:controlCode>
          <mhp:visibility>VISIBLE_ALL</mhp:visibility>
          <mhp:serviceBound>false</mhp:serviceBound>
          <mhp:priority>0</mhp:priority>
          <mhp:version>0</mhp:version>
          <mhp:mhpVersion>
            <mhp:profile>0</mhp:profile>
            <mhp:versionMajor>0</mhp:versionMajor>
            <mhp:versionMinor>0</mhp:versionMinor>
            <mhp:versionMicro>0</mhp:versionMicro>
          </mhp:mhpVersion>
        </mhp:applicationDescriptor>
        <mhp:applicationSpecificDescriptor>
          <mhp:dvbjDescriptor>
            <mhp:location>http://192.168.11.37/SyncDemo.jar</mhp:location>
            <mhp:applicationStructure>
              <mhp:classPathExtension/>
              <mhp:initialClass>demo.SyncPlayerDemo</mhp:initialClass>
            </mhp:applicationStructure>
          </mhp:dvbjDescriptor>
        </mhp:applicationSpecificDescriptor>
      </mhp:Application>
    </mhp:ApplicationList>
  </mhp:ApplicationDiscovery>
</mhp:ServiceDiscovery>
```

# FIG. 7

LOADED

InitApp()

PAUSED

startApp()   pauseApp()

STARTED

destroyApp()

DESTROYED

# FIG. 8

BROADCAST STATION

BROADCAST STATION SERVER GROUP

| CONTENTS MANAGEMENT /DISTRIBUTION SERVER | BROADCAST STATION SERVICE SERVER |

SECURITY

API

DEDICATED LINE

AUTHENTICATION

BROADCASTING/ COMMUNICATION COOPERATION BASE SERVER

INTERNET

B TO B DATA FORMAT

SERVER FOR EACH SERVICE (E.G.: TRANSLATION OF SUBTITLES) (E.G.: GENERATION OF RECOMMENDATION)

APP  APP  APP

APP MANAGEMENT/DISTRIBUTION

SERVICE PROVIDER SERVER GROUP

THIRD PARTY

BROADCAST CONTENTS

ADDITIONAL INFORMATION FOR BROADCAST SIGNAL

APP

REQUEST/DOWNLOAD

CONTENTS TRANSPORT FORMAT

INTERNET

CONTROL INFORMATION (E.G.: NOTIFICATION, ETC.)

TERMINAL COOPERATION FUNCTION

REQUEST/DOWNLOAD

CONTENTS TRANSPORT FORMAT

CREATION FOR EVERY SERVICE

RECEIVER

| APP | STB |

API (RECEIVER FUNCTION USE)

| BASIC FUNCTION | SYNCHRONIZATION |
| | APP MANAGEMENT |

| APP | | APP |
| PC | | PORTABLE TERMINAL |

SECURITY

INTERNET

EP 2 712 188 A1

# FIG. 9

BROADCAST CONTENTS (PROGRAM)

BROADCAST (RADIO WAVES)

CREATION FOR EVERY SERVICE

RECEIVER

RECEIVER CONTROL

DEDICATED LINE

(E.G..: NOTIFICATION)

APPROVAL MECHANISM

BROADCASTING/ COMMUNICATION COOPERATION BASE SERVER

(E.G..: NOTIFICATION)

TERMINAL COOPERATION FUNCTION

APP    STB

API (RECEIVER FUNCTION USE)

BASIC FUNCTION

SYNCHRONIZATION

APP MANAGEMENT

METADATA (EPG, SI)

SERVER FOR EACH SERVICE

SERVICE (INCLUDING VOD)

SERVER FOR EACH SERVICE

INTERNET

REQUEST/DOWNLOAD

APP

PC

APP

PORTABLE TERMINAL

APP

APP MANAGEMENT/ DISTRIBUTION SERVER

INTERNET

REQUEST/DOWNLOAD

SECURITY

EP 2 712 188 A1

# FIG. 10

# FIG. 11

| HTML BROWSER | STREAMING RECEPTION/REPRODUCTION FUNCTION | | | | | | |

| HTML CONTENTS | REPRODUCTION CONTROL METAFILE | VIDEO DATA | AUDIO DATA | SUBTITLE DATA | ERROR CORRECTION SCHEME | RTSP | DRM PROTOCOL |
| | | MULTIPLEXING FORMAT (TTS) | | | | | |

| | REPRODUCTION CONTROL METAFILE TRANSMISSION RULE | VIDEO DATA TRANSMISSION RULE | VIDEO DATA TRANSMISSION RULE | ERROR CORRECTION TRANSMISSION RULE | | |
| | HTTP | | RTP | | | |

| TCP/UDP |

| IP(v4/v6) |

EP 2 712 188 A1

# FIG. 12

FIG. 12

**BROADCAST PROVIDER** → BROADCAST PROGRAM / APPLICATION CONTROL INFORMATION →

**RECEIVER**

SECURE MANAGER

- ·APP AUTHENTICATION: SIGNATURE VERIFICATION
- ·PRESENTATION CONTROL: CONTROL INFORMATION AND ID

**SERVICE PROVIDER** → APP SERVER → DATA (CONTENTS) →

UNOFFICIAL APP

OFFICIAL APP

APP SERVER

DATA (CONTENTS)

NECESSARY MINIMUM CONTROL ASSUMED BY BROADCAST PROVIDER IS ASSURED => ID AND SIGNATURE ATTACHMENT

SIGNATURE/ID

**SERVICE PROVIDER** → APP REGISTRATION → **APP REGISTRATION MANAGER (THIRD-PARTY AUTHORITY)**

EP 2 712 188 A1

# FIG. 13

EP 2 712 188 A1

# FIG. 14

EEW

PRESENTATION CONTROL SIGNAL
(PRESENTATION POLICY)

APP

RECEIVER

APPLICATION SERVER

INTERNET

TODAY'S NEWS, FIRST SNOW WAS OBSERVED IN TOKYO.

| POLICY LEVEL | SIMULTANEOUS DISPLAY | | OVERLAY | | ASSUMED EVENT, PROGRAM (EXAMPLE) |
|---|---|---|---|---|---|
| | BROADCAST | COMMUNICATION | BROADCAST | COMMUNICATION | |
| 4 | × | × | × | × | EMERGENCY WARNING BROADCAST, EEW |
| 3 | O | O | × | × | EMERGENCY NEWS, CAMPAIGN BROADCAST AND ELECTION COVERAGE |
| 2 | O | O | O | × | NEWS |
| 1 | O | O | O | O | OTHERS (SPORTS, VARIETY, ETC.) |

PRESENTATION RULE

EP 2 712 188 A1

# FIG. 15

EXAMPLE OF PRESENTATION RULE

| PRESENTATION LEVEL | COMMUNICATION CONTENTS PRESENTATION METHOD |
|---|---|
| 3 | PRESENTATION DENIAL |
| 2 | PERMISSION OF PRESENTATION OUTSIDE BROADCAST SCREEN |
| 1 | PERMISSION OF PRESENTATION ON BROADCAST SCREEN |

EP 2 712 188 A1

# FIG. 16

PROGRAMMING OF DIGITAL BROADCAST WORLD

SCREEN DISPLAY OF BROADCASTING /COMMUNICATION COOPERATION SERVICE

POLICY LEVEL

PROGRAM A

OFFICIAL APP

MIDORI:XXXXX
NORI:XXXXXX
RICK:XXXXX

RECOMMEND

1

UNOFFICIAL APP

PROGRAM B

MIDORI:XXXXX
NORI:XXXXXX
RICK:XXXXX

RECOMMEND

2

UNOFFICIAL APP IS OUTSIDE BROADCAST SCREEN

PROGRAM C

MIDORI:XXXX
NORI:XXXXXX
RICK:XXXXX

RECOMMEND

3

ALL APPs ARE OUTSIDE BROADCAST SCREEN

PROGRAM D

4

INHIBITION OF DISPLAY OF ALL APPLICATIONS

TIME

# FIG. 17

POLICY LEVEL

PROGRAM A

**1**

OFFICIAL APP

MIDORI:XXXXX
NORI:XXXXXX
RICK:XXXXX

RECOMMEND
XXXXXXXX
XXXXXXXX
XXXXXXXX
XXXXXXXX

UNOFFICIAL APP

EEW RECEPTION

**4**

EEW

EEW (JAPAN METEOROLOGICAL AGENCY)
EARTHQUAKE OCCURRED OFF KUSHIRO, WARNING OF STRONG SHAKING
SOUTHERN HOKKAIDO, EASTERN HOKKAIDO
CENTRAL HOKKAIDO, NORTHERN HOKKAIDO, AOMORI

ALL APPs ARE OUTSIDE BROADCAST SCREEN

MIDORI:XXXXX
NORI:XXXXXX
RICK:XXXXX

RECOMMEND
XXXXXXXX
XXXXXXXX
XXXXXXXX
XXXXXXXX

TIME

# FIG. 18

FIG. 19

# FIG. 20

VIDEO CONTROL UNIT (407)

AUDIO CONTROL UNIT (409)

APPLICATION EXECUTION CONTROL UNIT (412)

APPLICATION EXECUTION UNIT (435)

RECEIVER API UNIT (436)

TERMINAL COOPERATION API UNIT (437)

EXTERNAL I/F UNIT (417)

DATA BROADCASTING EXECUTION UNIT (406)

SEPARATING UNIT (402)

COMMUNICATION INPUT /OUTPUT UNIT (411)

RESOURCE CONTROL UNIT (439)

OTHER FUNCTIONAL UNIT

PRESENTATION CONTROL UNIT (413)

APPLICATION CONTROL UNIT (434)

RESOURCE ACCESS CONTROL UNIT (438)

APPLICATION STORAGE UNIT (431)

APPLICATION MANAGEMENT UNIT (433)

APPLICATION AUTHENTICATION UNIT (432)

EP 2 712 188 A1

# FIG. 21

PRESENTATION CONTROL UNIT ~413

BROADCAST RECEPTION UNIT ~401

SEPARATING UNIT ~402

COMMUNICATION INPUT /OUTPUT UNIT ~411

DATA BROADCASTING EXECUTION UNIT ~406

EVENT ANALYSIS UNIT ~453

POLICY LEVEL MATCHING UNIT ~454

PROGRAM POLICY STORAGE UNIT ~456

EVENT CONTROL UNIT ~455

POLICY LEVEL STORAGE UNIT ~458

POLICY DATA MANAGEMENT UNIT ~451

POLICY DATA STORAGE UNIT ~452

POLICY ARBITRATION UNIT ~457

VIDEO CONTROL UNIT ~407

AUDIO CONTROL UNIT ~409

APPLICATION EXECUTION CONTROL UNIT ~412

EP 2 712 188 A1

# FIG. 22

```
<usr>:usr001
        ├────────── <key>:name  ────────  <value>:YAMADA HANAKO
        ├────────── <key>:address ──────  <value>: ・・・
        ├────────── <key>:age    ────────  <value>: ・・・
        └────────── <key>:123456  ──────  <value>: ・・・

<usr>:usr002
        ⋮

<usr>:family
        ├────────── <key>:1A3518 ──────  <value>: ・・・
        └────────── <key>: ・・・   ──    <value>: ・・・
```

# FIG. 23

**434:APPLICATION**  **435:APPLICATION EXECUTION UNIT**  **462:ACCESS CONTROL UNIT**  **461:USE STATE DETERMINATION UNIT**  **439:RESOURCE CONTROL UNIT**

ACQUIRE AIT — S101

app 001 START COMMAND
S102

START app 001 — S103

DATA ACQUISITION REQUEST
<key>: name
S111

USE STATE DETERMINATION REQUEST    S121

「usr001」
S122

READ REQUEST
<usr>: usr 001,
<key>: name
S131    S132

EXTRACT TARGET DATA

<value>: YAMADA HANAKO
S133

EP 2 712 188 A1

# FIG. 24

```
<usr>:usr001
        ┌──── <key>:name ───── <src>:own ──────── <value>:YAMADA HANAKO ─────── <policy>:default_policy
        ├──── <key>:address ── <src>:own ──────── <value>:··· ──────────────── <policy>:default_policy
        ├──── <key>:age ────── <src>:own ──────── <value>:··· ──────────────── <policy>:default_policy
        └──── <key>:123456 ─── <src>:app 101 ──── <value>:··· ──────────────── <policy>:only_use_policy

<usr>:usr002
    .
    .

<usr>:family
        ┌──── <key>:1A3518 ─── <src>:app 021 ──── <value>:··· ──────────────── <policy>:···
        └──── <key>:··· ────── <src>:··· ──────── <value>:··· ──────────────── <policy>:···
```

EP 2 712 188 A1

FIG. 25A

```
[only_use_policy]

If
  subject = src
then
  allow read
else
  deny read
```
∽C11

FIG. 25B

```
[allow_all_policy]
allow read
```
∽C12

FIG. 25C

```
[src_or_popup_policy]
if
  subject = src
then
  allow read
else if
  popup-select
then
  allow read
else
  deny read
```
∽C13

FIG. 25D

```
[default_policy]
if
  popup-select
then
  allow read
else
  deny read
```
∽C14

# FIG. 26

434:APPLICATION CONTROL UNIT | 435:APPLICATION EXECUTION UNIT | 462:ACCESS CONTROL UNIT | 461:USE STATE DETERMINATION UNIT | 463:POLICY DETERMINATION UNIT | 439:RESOURCE CONTROL UNIT

ACQUIRE AIT — S201

app 002 START COMMAND

S202

START app 002 — S203

DATA ACQUISITION REQUEST
<subject>: app 002 PROVIDER ID,
<key>: name

S211

S221 USE STATE DETERMINATION REQUEST

POLICY DETERMINATION REQUEST
<subject>: app 002 PROVIDER ID,
<usr>: usr 001,
<key>: name

「usr001」 S222

POLICY READ REQUEST
<usr>: usr 001,
<key>: name

S231

S233

S232    READ POLICY AND src

default_policy,
<src>:own

S235

DETERMINE ACCESS PERMISSION/DENIAL
(DISPLAY POPUP SCREEN)

S234

POLICY DETERMINATION RESULT
(ACCESS PERMISSION)

READ REQUEST
<usr>: usr 001,
<key>: name

S236

S242

S243    <value>: YAMADA HANAKO

S241    READ TARGET DATA

EP 2 712 188 A1

# FIG. 27

EP 2 712 188 A1

| 434:APPLICATION CONTROL UNIT | 435:APPLICATION EXECUTION UNIT | 462:ACCESS CONTROL UNIT | 461:USE STATE DETERMINATION UNIT | 439:RESOURCE CONTROL UNIT |
|---|---|---|---|---|

S301

ACQUIRE AIT

app 003
START COMMAND

S303

S302

START app 003

DATA SAVE REQUEST
<key>:20984721,
<src>app 003 PROVIDER ID,
<value>:80,
<policy>:only_use_policy

USE STATE
DETERMINATION
REQUEST
S321

S311

「usr001」 S322

WRITE REQUEST
<usr>: family,
<key>: 20984721,
<src> app 003 PROVIDER ID,
<value>: 80,
<policy>: only_use_policy

S332

S331

WRITE DATA

WRITE COMPLETION
NOTIFICATION

S333

# FIG. 28

<key>:name — <src>:own — <value>:YAMADA HANAKO — <policy>:default_policy

<usr>:usr001

- <key>:name ——— <src>:own ——— <value>:YAMADA HANAKO ——— <policy>:default_policy
- <key>:address ——— <src>:own ——— <value>:··· ——— <policy>:default_policy
- <key>:age ——— <src>:own ——— <value>:··· ——— <policy>:default_policy
- <key>:123456 ——— <src>:app 101 ——— <value>:··· ——— <policy>:only_use_policy

<usr>:usr002

:

<usr>:family

- <key>:1A3518 ——— <src>:app 021 ——— <value>:··· ——— <policy>:···
- <key>:··· — <src>:··· ——— <value>:··· ——— <policy>:···
- <key>:20984721 — <src>:app 002 PROVIDER ID — <value>:··· ——— <policy>:80

EP 2 712 188 A1

# FIG. 29

434:APPLICATION CONTROL UNIT | 435:APPLICATION EXECUTION UNIT | 462:ACCESS CONTROL UNIT | 461:USE STATE DETERMINATION UNIT | 463:POLICY DETERMINATION UNIT | 439:RESOURCE CONTROL UNIT

ACQUIRE AIT — S401

app 004 START COMMAND

S402

START app 004 — S403

DATA ACQUISITION REQUEST
&lt;subject&gt;:app 004 PROVIDER ID,
&lt;key&gt;:20984721

S411

USE STATE DETERMINATION REQUEST S421

「family」 S422

POLICY DETERMINATION REQUEST
&lt;subject&gt;:app 002 PROVIDER ID,
&lt;usr&gt;:family,
&lt;key&gt;:20984721

S431

POLICY READ REQUEST
&lt;usr&gt;:family,
&lt;key&gt;:20984721

S433

S432

READ POLICY AND src

only_use_policy,
&lt;src&gt;:app 003 PROVIDER ID

S434

S435

DETERMINE ACCESS PERMISSION/DENIAL
(&lt;subject&gt; ≠ &lt;src&gt;)

POLICY DETERMINATION RESULT
(ACCESS DENIAL)

S436

ERROR CODE

S441

EP 2 712 188 A1

## INTERNATIONAL SEARCH REPORT

| International application No. |
|---|
| PCT/JP2012/062826 |

### A. CLASSIFICATION OF SUBJECT MATTER
*H04N7/173*(2011.01)i, *G06F21/22*(2006.01)i, *G06F21/24*(2006.01)i, *H04H60/14*(2008.01)i

According to International Patent Classification (IPC) or to both national classification and IPC

### B. FIELDS SEARCHED

Minimum documentation searched (classification system followed by classification symbols)
H04N7/173, G06F21/22, G06F21/24, H04H60/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2007-135058 A (Nippon Hoso Kyokai), 31 May 2007 (31.05.2007), entire text; all drawings (Family: none) | 1-6 |
| A | JP 2003-264748 A (NEC Corp.), 19 September 2003 (19.09.2003), entire text; all drawings (Family: none) | 1-6 |
| A | YAMAMORI et al., "Access Control Method for Terrestrial Digital Broadcasting and Mobile Communication Convergence", ITE Technical Report, 14 September 2006 (14.09.2006), vol.30, no.44, pages 67 to 72 | 1-6 |

☐ Further documents are listed in the continuation of Box C.        ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>07 August, 2012 (07.08.12) | Date of mailing of the international search report<br>28 August, 2012 (28.08.12) |
| Name and mailing address of the ISA/<br>Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2011114051 A

### Non-patent literature cited in the description

- Data Coding and Transmission Specification for Digital Broadcasting. Association of Radio Industries and Businesses (ARIB) standard (STD)-B24 Version 5.4 (Fascicle 2. ARIB, 16 December 2009

- Toward the Construction of Hybridcast. **KATO HISAKAZU.** NHK Science & Technical Research Laboratories (STRL) R&D. September 2010, 56-63